# EUROPÄISCHE PATENTSCHRIFT

(11) **EP 3 590 796 B1**
(45) Veröffentlichungstag und Bekanntmachung des Hinweises auf die Patenterteilung: **22.06.2022**
(21) Anmeldenummer: 18182212.3
(22) Anmeldetag: 06.07.2018
(51) Int. Cl.: B62D 33/04, B60P 7/15

(54) **KOFFERAUFBAU EINES NUTZFAHRZEUGS MIT LADUNGSSICHERUNGSPROFIL**
BOX BODY OF A COMMERCIAL VEHICLE WITH LOAD SECURING RAIL
COFFRE D'UN VÉHICULE UTILITAIRE DOTÉ D'UN PROFILÉ DE SÉCURISATION DE CHARGE

(43) Veröffentlichungstag der Anmeldung: 08.01.2020
(73) Patentinhaber: Schmitz Cargobull AG, 48341 Altenberge (DE)
(72) Erfinder: Beelmann, Reinhard, 45721 Haltern am See (DE)
(74) Vertreter: Cohausz & Florack

(56) Entgegenhaltungen:
- US-A1- 2003 210 966
- US-A1- 2006 061 136
- US-A1- 2015 110 568
- US-B1- 6 322 651
- US-B1- 9 944 334

## Beschreibung

Die Erfindung betrifft einen Kofferaufbau eines Nutzfahrzeugs, insbesondere Lastkraftwagens, Anhängers oder Sattelaufliegers, mit wenigstens einer festen Seitenwand, wobei die Seitenwand ein sich über wenigstens im Wesentlichen die gesamte Länge und wenigstens im Wesentlichen die gesamte Höhe der Seitenwand erstreckendes Seitenwandpaneel aufweist, wobei die Seitenwand zwischen den seitlichen Rändern des Seitenwandpaneels eine Mehrzahl von wenigstens im Wesentlichen quer zur Längsrichtung des Seitenwandpaneels ausgerichteten, voneinander beabstandeten und mit dem Seitenwandpaneel verbundenen Ständerelementen zur Aussteifung der Seitenwand aufweist.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen.

So sind beispielsweise Planenaufbauten bekannt, (US9944334) bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern. Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden zweischalige Paneele auf, die eine äußere und eine innere, strukturgebende Decklage sowie eine dazwischen vorgesehene Kernlage umfassen, die typischerweise aus einem geschäumten Kunststoff gebildet wird. Dabei können die innere und/oder die äußere Decklage, welche die beiden Schalen des Paneels bilden, selbst bedarfsweise mehrlagig aufgebaut sein. Darüber hinaus sind Kofferaufbauten mit einschaligen Seitenwänden bekannt, die eine von einem Paneel aus einem glasfaserverstärkten Kunststoff, Stahl oder Aluminium verschlossene Gitterstruktur aus vertikalen und horizontalen Profilen aufweisen.

Um beispielsweise das Dach abzustützen, können die Seitenwände mit einer Mehrzahl von zur Aussteifung der Seitenwände vorgesehenen, wenigstens im Wesentlichen vertikal angeordneten und in Längsrichtung der Seitenwand voneinander beabstandeten Ständerelementen vorgesehen sein. Ferner können die Ständerelemente an der zum Laderaum weisenden Seite mit einem strukturgebenden Paneel versehen sein.

Kofferaufbauten weisen ferner meist Ladungssicherungsprofile und/oder Scheuerleistenprofile auf, die in vertikaler und/oder horizontaler Ausrichtung wenigstens in Teilbereichen der Seitenwände vorgesehen sind. Bei einem zweischaligen Aufbau der Seitenwandpaneele sind die Ladungssicherungsprofile und/oder Scheuerleistenprofile typischerweise zum Laderaum hin bündig in die Seitenwandpaneele eingelassen. Um bei unterschiedlichen Beladesituationen stets eine zufriedenstellende Ladungssicherung betreiben und/oder eine Beschädigung des Kofferaufbaus durch scheuernde Ladung vermeiden zu können, sind an den Seitenwänden von Kofferaufbauten meist eine entsprechende Anzahl von Ladungssicherungsprofilen und/oder Scheuerleistenprofilen in einer entsprechenden Länge vorgesehen. Dabei ist bei Verwendung kürzerer Ladungssicherungsprofile und/oder Scheuerleistenprofile meist deren Anzahl höher. Auch wenn kürzere Ladungssicherungsprofile und/oder Scheuerleistenprofile kostengünstiger sind, wird dieser Kostenvorteil durch die Bereitstellung zusätzlicher Ladungssicherungsprofile und/oder Scheuerleistenprofile oftmals wieder zu Nichte gemacht. Grundsätzlich muss dabei also ein ausgewogener Kompromiss zwischen einer komfortablen und zuverlässigen Ladungssicherung und/oder einem zweckmäßigen Schutz des Kofferaufbaus gegenüber beim Be- und Entladen scheuernder Ladung einerseits und einer kostengünstigen Herstellung des Kofferaufbaus andererseits gefunden werden.

Daher liegt der vorliegenden Erfindung die Aufgabe zugrunde, den Kofferaufbau der eingangs genannten und zuvor näher beschriebenen Art derart auszugestalten und weiterzubilden, dass die Herstellungskosten gesenkt werden können, ohne jedoch nennenswerte Einschränkungen hinsichtlich der Verwendung und der Handhabung des Kofferaufbaus in Kauf nehmen zu müssen.

Diese Aufgabe ist bei einem Paneelstrukturelement nach dem Oberbegriff von Anspruch 1 dadurch gelöst, dass wenigstens einige von den Ständerelementen der wenigstens einen Seitenwand an einander zugeordneten Seiten jeweils wenigstens ein Verbindungsmittel zum lösbaren, formschlüssigen Verbinden mit Ladungssicherungsprofilen und/oder Scheuerleistenprofilen aufweisen.

Die Erfindung hat also erkannt, dass die Ladungssicherungsprofile und/oder Scheuerleistenprofile in Kofferaufbauten nicht ortsfest, etwa bündig in die Innenseite eines zweischaligen Seitenwandpaneels aufgenommen, vorgesehen sein müssen, sondern dass die Ladungssicherungsprofile und/oder Scheuerleistenprofile je nach der jeweiligen Beladungssituation des Kofferaufbaus an den Stellen im Kofferaufbau angebracht werden können, wo die Ladungssicherung stattfinden bzw. der Schutz gegenüber scheuernder Ladung sichergestellt werden soll. Dies hat zur Folge, dass grundsätzlich weniger Ladungssicherungsprofile und/oder Scheuerleistenprofile in einem Kofferaufbau vorgesehen werden müssen, als wenn die Ladungssicherungsprofile und/oder Scheuerleistenprofile ortsfest in die Seitenwand des Kofferaufbaus integriert wären. Allerdings erfordert die flexible Anbringung der Ladungssicherungsprofile und/oder Scheuerleistenprofile in Abhängigkeit der jeweiligen Beladungssituation zusätzliche Elemente, an denen die Ladungssicherungsprofile und/oder Scheuerleistenprofile befestigt werden können. Zudem sind umso mehr solcher Elemente erforderlich, je flexibler bei der Ladungssicherung oder dem Schutz gegenüber scheuernder Ladung die jeweilige Beladungssituation berücksichtigt werden soll. Im Ergebnis würde also die Einsparung von Ladungssicherungsprofilen und/oder Scheuerleistenprofilen grundsätzlich durch die zusätzlich erforderlichen Elemente zum flexiblen Montieren der verbliebenen Ladungssicherungsprofile und/oder Scheuerleistenprofile wieder aufgehoben.

Die Erfindung hat jedoch erkannt, dass dies dann nicht in dem Maße der Fall ist, wenn den zusätzlichen Elementen eine weitere Funktion zugeordnet wird. Damit stellen die entsprechenden Elemente keine lediglich zusätzlichen Elemente mehr dar.

Vorliegend sind erfindungsgemäß sogenannte Ständerelemente vorgesehen, die einerseits jeweils wenigstens ein Verbindungsmittel zum lösbaren, formschlüssigen Verbinden mit Ladungssicherungsprofilen und/oder Scheuerleistenprofilen aufweisen und andererseits dem Aussteifen der Seitenwand dienen. Zu diesem Zweck sind die Ständerelemente mit dem Seitenwandpaneel verbunden und können die Ständerelemente ähnlich einem Ständerelement eines Fachwerks das Dach des Kofferaufbaus wenigstens teilweise tragen bzw. abstützen, und zwar insbesondere gegenüber dem Ladeboden oder der Bodenstruktur des Kofferaufbaus. Die Einsparung, die sich durch die Ständerelemente erzielen lässt, ergibt sich daraus, dass die Ständerelemente einen einschaligen Aufbau der Seitenwand mit nur einem einzigen geschlossenen Seitenwandpaneel ermöglichen. Somit kann auf die bezogen auf den Kofferaufbau innere Decklage ebenso verzichtet werden wie auf die Kernlage bekannter zweischaliger Seitenwandpaneele. Mithin ergibt sich ein sehr viel einfacherer und kostengünstigerer Aufbau der wenigstens einen Seitenwand des erfindungsgemäßen Kofferaufbaus, der grundsätzlich durch die Verwendung von zusätzlichen Ständerelementen und/oder durch zusätzliche Funktionen der Ständerelemente als Montagelemente der flexibel und lösbar zu montierenden Ladungssicherungsprofile und/oder Scheuerleistenprofile ermöglicht wird. Durch das lösbare, formschlüssige Verbinden von Scheuerleistenprofilen kann beispielsweise einer Abnutzung der Scheuerleistenprofile durch an den Scheuerleistenprofilen scheuernde Ladung leicht Rechnung getragen werden. Wenn die Scheuerleistenprofile stark abgenutzt sind, können die Scheuerleistenprofile einfach durch neue, insbesondere gleichartige Scheuerleistenprofile ersetzt werden.

Letztlich werden erfindungsgemäß also viele unterschiedliche Synergien durch teilweise zunächst kontraproduktiv oder wenigstens untereinander funktional unverbunden erscheinende Maßnahmen erzielt. Zudem ist es prinzipiell bevorzugt, wenn alle Ständerelemente, insbesondere an einander zugeordneten Seiten, jeweils wenigstens ein Verbindungsmittel zum lösbaren, formschlüssigen Verbinden mit Ladungssicherungsprofilen und/oder Scheuerleistenprofilen aufweisen. Dadurch kann die Flexibilität für die wechselweise Montage des wenigstens einen Ladungssicherungsprofils und/oder Scheuerleistenprofils erhöht werden. Dennoch wäre es grundsätzlich unschädlich, wenn an einigen, insbesondere ausgesuchten, Stellen bestimmte Ständerelemente ohne Verbindungsmittel oder mit Verbindungsmitteln an anderen Seiten und/oder nur einer einzigen Seite vorgesehen wären.

Bei einer ersten besonders bevorzugten Ausgestaltung des Kofferaufbaus ist es durch den Verzicht auf eine zweischalige Bauweise der Seitenwand in besonders einfacher Weise möglich, die Ladungssicherungsprofile und/oder Scheuerleistenprofile ohne eine Beeinträchtigung der Ladung bzw. des Be- und Entladens zu montieren. Dies wird insbesondere erreicht, indem die Ladungssicherungsprofile und/oder Scheuerleistenprofile an den einander zugeordneten, vorzugsweise zudem einander zugewandten, Seiten der Ständerelemente über dort vorgesehene Verbindungsmittel montiert werden können. Dies ermöglicht eine platzsparende Anordnung der Ladungssicherungsprofile und/oder Scheuerleistenprofile, da diese wenigstens teilweise zwischen den benachbarten Ständerelementen in der Seitenwand aufgenommen sein können. Besonders bevorzugt ist es dabei, wenn die Ladungssicherungsprofile und/oder Scheuerleistenprofile im verbundenen Zustand nicht weiter in den Laderaum hineinragen als die Ständerelemente, mit denen die Ladungssicherungsprofile und/oder Scheuerleistenprofile verbunden sind.

Dabei ist der Begriff der einander zugeordneten bzw. einander zugewandten Seiten der Ständerelemente bewusst sehr allgemein formuliert worden. Es kommt nämlich nicht zwingend darauf an, dass die Verbindungsmittel an Seitenflächen der Ständerelemente vorgesehen sind, die genau aufeinander weisen oder aufeinander ausgerichtet sind. Die Verbindungsmittel können beispielsweise auch an Seitenflächen vorgesehen sein, die ausschließlich in Richtung des Laderaums oder weg von dem anderen Ständerelement zum Verbinden des Ladungssicherungsprofils und/oder Scheuerleistenprofils weist. Grundsätzlich ist es nämlich zwar möglich, dass die Verbindungsmittel auch an anderen Seiten der Ständerelemente angebracht sind, dann muss das Ladungssicherungsprofil und/oder Scheuerleistenprofil aber wenigstens teilweise um das Ständerelement herumgeführt werden. Sofern hierfür nicht geeignete Aussparungen in den Ständerelementen vorgesehen sind, wird dies dazu führen, dass die verfügbare Breite des Laderaums durch die Ladungssicherungsprofile und/oder Scheuerleistenprofile eingeschränkt wird. Die Ladungssicherungsprofile und/oder Scheuerleistenprofile müssen dann vereinfacht gesprochen wenigstens teilweise um einzelne Ständerelemente herumgeführt werden, was vorzugsweise, insbesondere in Bezug auf die Ladungssicherungsprofile, vermieden werden sollte.

Alternativ oder zusätzlich weisen wenigstens einige von jeweils benachbarten Ständerelementen an einander zugeordneten Seiten jeweils wenigstens ein Verbindungsmittel zum lösbaren, formschlüssigen Verbinden mit Ladungssicherungsprofilen und/oder Scheuerleistenprofilen auf. Dann kann darauf verzichtet werden, dass sich die Ladungssicherungsprofile und/oder Scheuerleistenprofile über ein Ständerelement hinweg erstrecken. Es kann vielmehr vorgesehen sein, dass die Ladungssicherungsprofile und/oder Scheuerleistenprofile sich stets von einem Ständerelement zum jeweils benachbarten Ständerelement erstrecken. Auf diese Weise können die Ladungssicherungsprofile und/oder Scheuerleistenprofile platzsparend, insbesondere aufgenommen in der Seitenwand zwischen den benachbarten Ständerelementen, angeordnet werden.

Alternativ oder zusätzlich ist es zur Aussteifung und/oder zum Abstützen des Dachs des Kofferaufbaus zweckmäßig, wenn sich die Ständerelemente wenigstens im Wesentlichen über die gesamte Höhe der Seitenwand und/oder des Seitenwandpaneels erstrecken. So kann beispielsweise ein Knicken der Seitenwand verhindert und können die Gewichtskräfte des Dachs zuverlässig von dem Dach an die Bodenstruktur des Kofferaufbaus abgegeben werden.

Im Übrigen ist es bevorzugt, wenn wenigstens ein Ladungssicherungsprofil und/oder Scheuerleistenprofile Verbindungsmittel zum Verbinden des Ladungssicherungsprofils mit wenigstens einem Verbindungsmittel wenigstens eines Ständerelements aufweist. Dies vereinfacht die Verbindung der Ladungssicherungsprofile und/oder Scheuerleistenprofile an den Ständerelementen. Insbesondere um die Ladungssicherungsprofile und/oder Scheuerleistenprofile platzsparend zwischen zwei benachbarten Ständerelementen anordnen zu können, bietet es sich weiter an, wenn die Verbindungsmittel an gegenüberliegenden Endbereichen der Ladungssicherungsprofile und/oder Scheuerleistenprofile vorgesehen sind. Alternativ oder zusätzlich wird das Bereitstellen einer zuverlässigen Verbindung zwischen dem Ladungssicherungsprofil und/oder Scheuerleistenprofil einerseits und den Ständerelementen andererseits vereinfacht, wenn die Verbindungsmittel der Ladungssicherungsprofile und/oder Scheuerleistenprofile korrespondierend zu den entsprechenden Verbindungsmitteln der zugeordneten Ständerelemente ausgebildet sind.

Alternativ oder zusätzlich kann die Ladungssicherung und/oder der Schutz des Kofferaufbaus vor scheuernder Ladung einfach, flexibel und zuverlässig erfolgen, wenn wenigstens ein Ladungssicherungsprofil und/oder Scheuerleistenprofil über Verbindungsmittel des Ladungssicherungsprofils und/oder Scheuerleistenprofils einerseits und Verbindungsmittel der Ständerelemente andererseits mit zwei Ständerelementen verbunden ist. Dabei ist es auch hinsichtlich der Montage durch den Bediener besonders einfach, wenn das wenigstens eine Ladungssicherungsprofil und/oder Scheuerleistenprofil mit benachbarten Ständerelementen verbunden ist. Insbesondere zu diesem Zweck kann es bevorzugt sein, wenn das wenigstens eine Ladungssicherungsprofil und/oder Scheuerleistenprofil an einander zugeordneten Seiten der dem Ladungssicherungsprofil und/oder Scheuerleistenprofil zugeordneten Ständerelementen mit den Ständerelementen verbunden ist und/oder wenn die Verbindungsmittel des wenigstens einen Ladungssicherungsprofils und/oder Scheuerleistenprofils an gegenüberliegenden Endbereichen des Ladungssicherungsprofils und/oder Scheuerleistenprofils angeordnet sind und/oder wenn die Verbindungsmittel des wenigstens einen Ladungssicherungsprofils und/oder Scheuerleistenprofils einerseits und die Verbindungsmittel der zugeordneten Ständerelemente andererseits korrespondierend zueinander ausgebildet sind.

Damit die Ladungssicherungsprofile und/oder Scheuerleistenprofile einfach und flexibel an unterschiedlichen Stellen der Seitenwand zu Ladungssicherungszwecken und/oder zum Schutz des Kofferaufbaus vor scheuernder Ladung montiert werden können, bietet es sich an, wenn die jeweils benachbarten Ständerelemente der Seitenwand bzw. die einander zugeordneten Verbindungsmittel der jeweils benachbarten Ständerelemente einen konstanten Abstand zueinander aufweisen. Die Montage kann zudem weiter vereinfacht und die Herstellkosten des Kofferaufbaus können zudem weiter gesenkt werden, wenn die Verbindungsmittel der Ständerelemente der Seitenwand jeweils gleichartig ausgebildet sind. Zudem oder alternativ können diese Vorteile auch erreicht werden, wenn die Ständerelemente der Seitenwand gleichartig ausgebildet sind oder wenn wenigstens mehrere Arten von Ständerelementen existieren, wobei von jeder Art der Ständerelemente mehrere Ständerelemente bei einer Seitenwand vorgesehen sind, und zwar der Einfachheit halber jeweils abwechselnd zueinander.

Zur einfachen und zuverlässigen Ladungssicherung kann ein Ladungssicherungsprofil wenigstens ein Ladungssicherungsmittel aufweisen. Die Flexibilität der Ladungssicherung wird dabei weiter verbessert, wenn eine Reihe von Ladungssicherungsmitteln an einem Ladungssicherungsprofil vorgesehen ist. Als Ladungssicherungsmittel kommen zudem der Einfachheit halber Ösen, Laschen, Nuten und/oder Öffnungen in Frage. Dabei können die Nuten und/oder Öffnungen zweckmäßig zum Einhaken eines Ladungssicherungselements, etwa in Form eines Spanngurts, genutzt werden, wenn diese wenigstens eine Hinterschneidung aufweisen bzw. bereitstellen. Dabei wird die Ladungssicherung weiter vereinfacht, wenn wenigstens eine Reihe von Ladungssicherungsmitteln der Länge des Ladungssicherungsprofils nach vorgesehen ist. So steht das Ladungssicherungsprofil bedarfsweise wenigstens im Wesentlichen über seine gesamte Länge für die Ladungssicherung zur Verfügung. Dabei ist es nicht nur konstruktiv, sondern auch von der Handhabung halber bevorzugt, wenn die Ladungssicherungsmittel der wenigstens einen Reihe von Ladungssicherungsmitteln in gleichförmigen Abständen zueinander über die Längserstreckung des Ladungssicherungsprofils verteilt angeordnet sind.

Die Ladungssicherungsprofile und/oder Scheuerleistenprofile können zweckmäßig und einfach auf unterschiedlichen Höhen der Seitenwand montiert werden, wenn an wenigstens einer Seite der Ständerelemente über die Längserstreckung der Ständerelemente verteilt wenigstens eine Reihe von Verbindungsmitteln vorgesehen ist. Zur Bereitstellung eines geeigneten Rasters für die Ladungssicherung bzw. die Ladungssicherungsprofile und/oder Scheuerleistenprofile bietet es sich dabei besonders an, wenn die Verbindungsmittel der wenigstens einen Reihe von Verbindungsmitteln in regelmäßigen Abständen zueinander verteilt angeordnet sind. Um eine sichere Montage des Ladungssicherungsprofils und/oder Scheuerleistenprofils zu gewährleisten, und zwar insbesondere bei breiteren Ladungssicherungsmitteln und/oder Scheuerflächen, kann das wenigstens eine Ladungssicherungsprofil und/oder Scheuerleistenprofile gleichzeitig über wenigstens zwei Verbindungsmittel mit wenigstens einem Ständerelement verbunden sein.

Fertigungstechnisch einfacher und kostengünstiger kann es sein, wenn das wenigstens eine Seitenwandpaneel eine Mehrzahl von in Längsrichtung des Seitenwandpaneels nebeneinander angeordneten und über Verbindungsbereiche miteinander verbundene Paneelelemente aufweist. Dann werden zwar mehr Bauteile und mehr Verbindungen benötigt, die Bauteile können aber besser gehandhabt werden, weil sie insgesamt kleiner sind. Dabei kann das Fügen einfach und dauerhaft ausgeführt werden, wenn die Verbindungsbereiche der Paneelelemente miteinander verklebt sind. Um die Verbindungsbereiche zu schützen und zu stabilisieren, kann es zweckdienlich sein, wenn wenigstens einige Ständerelemente jeweils einem Verbindungsbereich der Paneelelemente zugeordnet sind. Besonders bevorzugt ist es aus dem genannten Grund, wenn wenigstens im Wesentlichen jedem Verbindungsbereich ein Ständerelement und/oder wenigstens im Wesentlichen jedem Ständerelement ein Verbindungbereich zugeordnet ist. Das jeweils entsprechende Ständerelement kann den Verbindungsbereich überdeckend und/oder überbrückend angeordnet sein, um den Verbindungsbereich besser aussteifen und vor mechanischen Einwirkungen abschirmen zu können. Dies ist in besonderem Maße der Fall, wenn die Ständerelemente wenigstens teilweise außerhalb der entsprechenden Verbindungsbereiche mit jeweils den über die jeweiligen Verbindungsbereiche miteinander verbundenen Paneelelementen verbunden sind. Dabei bietet es sich der Einfachheit halber an, wenn die Ständerelemente mit den Paneelelementen verklebt sind.

Um die Herstellungskosten zu senken, ohne die Struktur und Funktionalität der Seitenwand nachhaltig zu beeinträchtigen, kann die Seitenwand einschalig ausgebildet sein. So wird beispielsweise lediglich ein Seitenwandpaneel auf lediglich einer Seite der Ständerelemente der Seitenwand vorgesehen. Auf der dem Laderaum zugewandten Seite der Seitenwand ist dagegen kein geschlossenes Seitenwandpaneel vorgesehen, wie an der Außenseite der Seitenwand. Dies kann bevorzugt zu einer Materialeinsparung führen, die eine Zugänglichkeit des Seitenwandpaneels zwischen den Ständerelementen und/oder eine Zugänglichkeit der Ständerelemente jeweils vom Laderaum des Kofferaufbaus aus zur Folge hat. Dabei ist keine durchgängige Zugänglichkeit des Seitenwandpaneels und/oder der Ständerelemente erforderlich. Es reicht aus, wenn die Zugänglichkeit des Seitenwandpaneels und/oder der Ständerelemente wenigstens abschnittsweise, insbesondere überwiegend gegeben ist.

Aus Kostengründen und Stabilitätsgründen können die Ständerelemente als Profile, vorzugsweise Metallprofile, ausgebildet sein. Wenn die Ständerelemente als, insbesondere offene, Hohlprofile ausgebildet sind, kann nicht nur Material eingespart werden, es kann auch eine hohe Steifigkeit erreicht werden. Die Ständerelemente können aber alternativ oder zusätzlich auch, insbesondere wenigstens im Wesentlichen durchgängig, mit einem trapezförmigen und/oder omegaförmigen und/oder hutförmigen Querschnitt versehen sein. Diese Querschnittsformen erlauben ein einfaches und langlebiges Verbinden, insbesondere Verkleben, des jeweiligen Ständerelements mit dem Seitenwandpaneel.

Die Ständerelemente können bedarfsweise auch jeweils eine Aufnahme zur wenigstens abschnittsweisen Aufnahme eines sich in Richtung des Laderaums des Kofferaufbaus erstreckenden Verbindungsbereichs aufweisen, was dem Schutz und der Abschirmung der Verbindungsbereiche entgegenkommt, ohne dass dies hinsichtlich der Ständerelemente zu nennenswerten Nachteilen führen würde. Dabei können die Ständerelemente zur Aussteifung der Seitenwand grundsätzlich jeweils mit Anlageflächen zu gegenüberliegenden Seiten des jeweiligen Verbindungsbereichs an den angrenzenden Paneelelementen anliegen, insbesondere verklebt sein.

Um die Paneelelemente einfach und zuverlässig fügen zu können, können die miteinander verbundenen Paneelelemente an ihren jeweils benachbarten Rändern zum Laderaum des Kofferaufbaus hin umgebogen, insbesondere abgekantet, sein. Dabei können die umgebogenen, insbesondere abgekanteten oder rollierten, benachbarten Ränder der Paneelelemente jeweils in einfacher und abdichtender Weise miteinander verklebt sein. Dabei bietet es sich aus Gründen der Stabilität besonders an, wenn der Abstand zwischen den Verbindungsbereichen der Paneelelemente und/oder zwischen den Ständerelementen wenigstens im Wesentlichen gleichförmig ausgebildet ist. So sind die Verbindungsbereiche und/oder die Ständerelemente gleichmäßig verteilt entlang des Seitenwandpaneels angeordnet. Dabei kann der jeweilige Abstand zwischen 0,3 m und 1,4 m, insbesondere zwischen 0,4 m und 1,3 m, betragen. Wenn Ständerelemente in einem wiederkehrenden Abstand von zwischen 1,0 m bis 1,4 m, vorzugsweise von zwischen 1,1 m und 1,3 m, insbesondere von ungefähr 1,2 m, angeordnet sind, können die Abstände der Ständerelemente entlang der Seitenwand mit der Länge zu transportierender Paletten, insbesondere sogenannter Europaletten, korrespondieren. Dies ist auch hinsichtlich der zu betreibenden Ladungssicherung vorteilhaft. Wenn die Ständerelemente in einem wiederkehrenden Abstand zwischen 0,4 m bis 0,8 m, vorzugsweise zwischen 0,5 m und 0,7 m, insbesondere von ungefähr 0,6 m, angeordnet sind, weisen jeweils übernächste Ständerelemente einen Abstand auf, der etwa der Länge zu transportierender Paletten, insbesondere sogenannter Europaletten, entspricht. Entsprechendes gilt für jeweils jedes dritte Ständerelement, wenn die Ständerelemente in einem wiederkehrenden Abstand von zwischen 0,3 m bis 0,5 m, insbesondere von ungefähr 0,4 m, angeordnet sind. Dann wird zudem erreicht, dass jeweils zwei übernächste Ständerelemente etwa im Abstand der Breite zu transportierender Paletten, insbesondere sogenannter Europaletten, angeordnet sind. Diese Breite beträgt etwa 0,8 m. Der entsprechende Abstand der Ständerelemente wird dabei vorzugsweise nicht zwischen den angrenzenden Rändern der Ständerelemente, sondern zwischen den sich entsprechenden Rändern oder zwischen den Mittellinien der benachbarten Ständerelemente gemessen. Ferner ist es nicht erforderlich, dass jeweils benachbarte Ständerelemente einen Abstand von zwischen 1,0 m bis 1,4 m, vorzugsweise von zwischen 1,1 m und 1,3 m, insbesondere von ungefähr 1,2 m, aufweisen. Dies kann beispielsweise jeweils für übernächste Ständerelemente gelten, die dann etwa im Abstand einer Palettenlänge angeordnet sein können. Dazwischen kann dann, vorzugsweise ebenfalls regelmäßig beabstandet, wenigstens ein zusätzliches Ständerelement vorgesehen sein. Bei jeweils wenigstens einem zusätzlichen Ständerelement können die Abstände jeweils benachbarter Ständerelemente vorzugsweise zwischen 0,3 m und 0,5 m, insbesondere zwischen 0,5 m und 0,7 m, liegen.

Das Verbinden der Ladungssicherungsprofile und/oder Scheuerleistenprofile an den Ständerelementen kann sehr einfach erfolgen, wenn die einander zugeordneten Seiten der Ständerelemente bezogen auf die Ständerelemente schräg nach außen und hin zum Seitenwandpaneel verlaufen. Dann kann sich das Ladungssicherungsprofil und/oder Scheuerleistenprofil beim Einsetzen zwischen den Ständerelementen selbst zentrieren, ohne dass es eines exakten Ausrichtens seitens des Benutzers bedürfte. Dabei bietet es sich der Handhabung halber an, wenn die einander zugeordneten Seiten der Ständerelemente mit den seitlich an die Ständerelemente angrenzenden Abschnitten des Seitenwandpaneels einen stumpfen Winkel, vorzugsweise zwischen 110° und 160°, insbesondere zwischen 125° und 145°, ausbilden.

Alternativ oder zusätzlich können für ein einfaches Einsetzen des wenigstens einen Ladungssicherungsprofils und/oder Scheuerleistenprofils zwischen den Ständerelementen die Endbereiche des Ladungssicherungsprofils und/oder Scheuerleistenprofils wenigstens abschnittsweise bezogen auf das Ladungssicherungsprofil schräg nach innen und hin zum Seitenwandpaneel verlaufen. Auch dann kann sich das Ladungssicherungsprofil und/oder Scheuerleistenprofil beim Einsetzen zwischen die Ständerelemente selbst zentrieren, ohne dass es eines exakten Ausrichtens seitens des Benutzers bedürfte. Dies gilt umso mehr, wenn die Endbereiche des Ladungssicherungsprofils und/oder Scheuerleistenprofils wenigstens abschnittsweise korrespondierend zu wenigstens einer Seite des wenigstens einen Ständerelements ausgerichtet sind. In Bezug auf die Endbereiche des wenigstens einen Ladungssicherungsprofils und/oder Scheuerleistenprofils ist also analog bevorzugt vorgesehen, dass die Endbereiche wenigstens abschnittsweise mit den seitlich angrenzenden Abschnitten des Seitenwandpaneels einen spitzen Winkel, vorzugsweise zwischen 20° und 70°, insbesondere zwischen 35° und 55°, ausbilden.

Unabhängig davon ist es besonders einfach, eine zuverlässige Verbindung zwischen dem wenigstens einen Ladungssicherungsprofil und/oder Scheuerleistenprofil einerseits und den zugehörigen Ständerelementen andererseits zu ermöglichen, wenn die Verbindungsmittel der Ständerelemente als Öffnungen und/oder Aufnahmen ausgebildet sind, die zur Bereitstellung einer formschlüssigen Verbindung vorzugsweise Hinterschneidungen definieren. Alternativ oder zusätzlich bietet es sich an, wenn die Verbindungsmittel des wenigstens einen Ladungssicherungsprofils und/oder Scheuerleistenprofils korrespondierend zu den Öffnungen und/oder Aufnahmen ausgebildet sind. So kann beispielsweise auch ein etwaig vorgesehenes Spiel innerhalb der Verbindung verringert werden. Der Einfachheit halber bietet es sich grundsätzlich für das Bereitstellen einer formschlüssigen Verbindung mit den Ständerelementen an, wenn die Endbereiche des wenigstens einen Ladungssicherungsprofils und/oder Scheuerleistenprofils Stabelemente aufweisen, die in die Ständerelemente, insbesondere die Öffnungen und/oder Aufnahmen der Ständerelemente eingreifen können. Für einen möglichst umfassenden Formschluss bietet es dabei besonders an, wenn die freie Enden der Stabelemente Hinterschnitte aufweisen, insbesondere pilzkopfförmig ausgebildet sind.

Hinsichtlich der Festigkeit, Schlagzähigkeit und Steifigkeit des Seitenwandpaneels bietet es sich an, das Seitenwandpaneel, insbesondere die Paneelelemente, aus einem Verbundlaminat umfassend wenigstens zwei Metallschichten und wenigstens eine zwischen den wenigstens zwei Metallschichten vorgesehene Kunststoffschicht auszubilden. Hinsichtlich der mechanischen Eigenschaften und der Herstellungskosten ist es dabei besonders zweckmäßig, wenn die Kunststoffschicht des Seitenwandpaneels, insbesondere des wenigstens einen Paneelelements, wenigstens im Wesentlichen aus einem thermoplastischen Kunststoff, vorzugsweise aus wenigstens einem Olefin, insbesondere wenigstens überwiegend aus Polypropylen (PP) gebildet ist. Alternativ oder zusätzlich wird die wenigstens eine der wenigstens zwei Metallschichten des Seitenwandpaneels, insbesondere des wenigstens einen Paneelelements, aus Aluminium und/oder Stahl gebildet.

Nachfolgend wird die Erfindung anhand einer lediglich Ausführungsbeispiele darstellenden Zeichnung näher beschrieben. In der Zeichnung zeigt
- Fig. 1: einen erfindungsgemäßen Kofferaufbau in einer perspektivischen Ansicht,
- Fig. 2: einen Abschnitt einer Seitenwand des Kofferaufbaus gemäß Fig. 1 in einer perspektivischen Ansicht,
- Fig. 3A-B: unterschiedliche Ständerelemente der Seitenwand aus Fig. 2 in einer perspektivischen Ansicht,
- Fig. 4: ein Paneelelement des Seitenwandpaneels der Seitenwand aus Fig. 2 in einer perspektivischen Ansicht,
- Fig. 5: den Schichtaufbau des Paneelelements aus Fig. 4 in einem Querschnitt,
- Fig. 6: ein Detail der Seitenwand aus Fig. 2 in einer Schnittansicht,
- Fig. 7A-B: ein Ladungssicherungsprofil des Kofferaufbaus aus Fig. 1 in perspektivischen Ansichten,
- Fig. 8: das Ladungssicherungsprofil aus Fig. 6 in einem mit den Ständerelementen der Seitenwand aus Fig. 1 verbundenen Zustand in einer perspektivischen Ansicht,
- Fig. 9: ein erstes alternatives Ladungssicherungsprofil in einer perspektivischen Ansicht,
- Fig. 10: das Ladungssicherungsprofil aus Fig. 8 in einem mit den Ständerelementen der Seitenwand aus Fig. 1 verbundenen Zustand in einer perspektivischen Ansicht,
- Fig. 11: ein zweites alternatives Ladungssicherungsprofil in einer perspektivischen Ansicht,
- Fig. 12: das Ladungssicherungsprofil aus Fig. 10 in einem mit den Ständerelementen der Seitenwand aus Fig. 1 verbundenen Zustand in einer perspektivischen Ansicht,
- Fig. 13A-B: ein Scheuerleistenprofil des Kofferaufbaus aus Fig. 1 in perspektivischen Ansichten,
- Fig. 14: das Scheuerleistenprofil aus Fig. 13 in einem mit den Ständerelementen der Seitenwand verbundenen Zustand in einer perspektivischen Ansicht,
- Fig. 15A-B: ein alternatives Scheuerleistenprofil in einer perspektivischen Ansicht und
- Fig. 16A-B: Seitenwände mit unterschiedlichen Scheuerleistenprofilen in einer perspektivischen Ansicht.

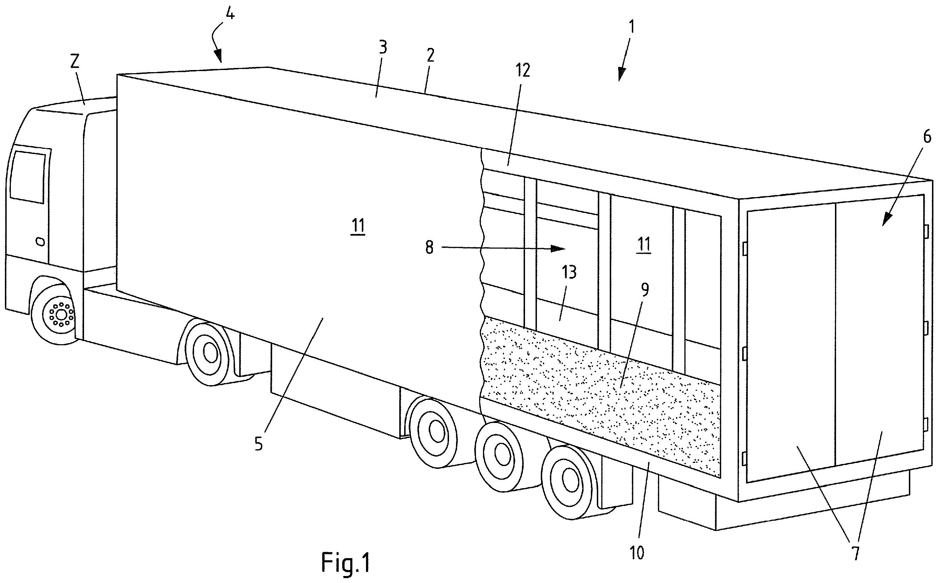

In der Fig. 1 ist ein Nutzfahrzeug 1 mit einem Kofferaufbau 2 in einer perspektivischen Ansicht dargestellt, das von einer Zugmaschine Z gezogen wird. Der Kofferaufbau 2 umfasst ein festes Dach 3, eine feste Stirnwand 4, zwei feste Seitenwände 5 und eine feste Rückwand 6, die im Wesentlichen durch zwei Flügeltüren 7 gebildet wird. Zudem umfasst der Aufbau einen Laderaum 8, der nach unten durch einen Ladeboden 9 einer Bodenstruktur 10 begrenzt wird, wobei der Ladeboden 9 dem Aufstellen von Ladung dient.

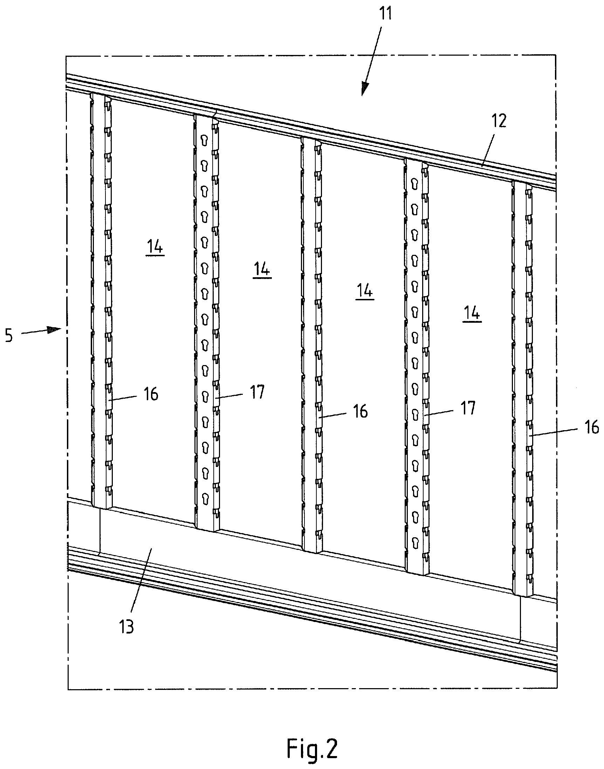

In der Fig. 2 ist ein Detail einer Seitenwand 5 dargestellt, die bei dem dargestellten und insoweit bevorzugten Nutzfahrzeug 1 einschalig ausgebildet ist, wobei die einzige Schale der Seitenwand 5 durch ein geschlossenes, die Seitenwand 5 verschließendes Seitenwandpaneel 11 gebildet wird. Das Seitenwandpaneel 11 ist an seinem oberen Rand mit einem Holm bzw. einer Holmstruktur 12 verbunden, die sich entlang der Seitenwand 5 erstreckt und die Verbindung der Seitenwand 5 mit dem Dach 3 bereitstellt. Die Holmstruktur 12 ist als verwindungssteifes Trägerelement mit einem hohen Flächenträgheitsmoment ausgebildet, um so der Aussteifung des Kofferaufbaus 2 zu dienen. Dem unteren Rand des Seitenwandpaneels 11 zugeordnet ist eine sogenannte Sockelscheuerleiste 13 vorgesehen, die die Seitenwand 5 vor Beschädigungen während des Be- und Entladens schützt. So stoßen bzw. scheuern Hubwagen, Rollwagen, Paletten etc. beim Be- und Entladen vornehmlich an die Sockelscheuerleiste 13, die diesen Belastungen besser widerstehen kann, als andere Bereiche des Seitenwandpaneels 11.

Das Seitenwandpaneel 11 weist eine Reihe von in Längsrichtung des Seitenwandpaneels 11 nebeneinander angeordneter Paneelelemente 14 auf, die sich wenigstens im Wesentlichen über die gesamte Breite oder Höhe des Seitenwandpaneels 11 bzw. der Seitenwand 5 erstrecken. Den Verbindungsbereichen 15 zweier aneinander angrenzender Paneelelemente 14 zugeordnet ist jeweils ein Ständerelement 16,17, das sich quer zur Längsrichtung des Seitenwandpaneels 11 erstreckt. Bei dem dargestellten und insoweit bevorzugten Seitenwandpaneel 11 erstrecken sich die Ständerelemente 16,17 wenigstens im Wesentlichen vertikal. Zudem erstrecken sich die Ständerelemente 16,17 über die gesamte Breite oder Höhe des Seitenwandpaneels 11 bzw. der Seitenwand 5. Dadurch tragen die Ständerelemente 16,17 die Holmstruktur 12 bzw. das Dach 3, dessen Gewicht über die Holmstruktur 12 wenigstens teilweise an die Ständerelemente 16,17 abgeleitet wird. Die Gewichtskräfte des Dachs 3 werden von den Ständerelementen 16,17 in die Bodenstruktur 10 des Kofferaufbaus 2 weitergeleitet.

Die einzelnen Paneelelemente 14 weisen eine Breite zwischen 550 mm und 650 mm auf. Mithin beträgt auch der Abstand jeweils benachbarter Ständerelemente 16,17 ebenfalls zwischen 550 mm und 650 mm. Es wären aber auch Breiten der Paneelelemente 17 zwischen beispielsweise 1100 mm und 1300 mm denkbar und zweckmäßig. Dann würde bedarfsweise der Abstand der jeweils benachbarten Ständerelemente 19,20 wenigstens etwa der Breite der Paneelelemente 14 entsprechen. Der Abstand wird dabei nicht von den einander zugeordneten Rändern der Ständerelemente 16,17, sondern von den Mittellinien der Ständerelemente 16,17 oder den Stellen der Ständerelemente 16,17 aus gemessen, die die Verbindungsbereiche 15 der zugeordneten Paneelelemente 14 überdecken. Bei dem dargestellten und insoweit bevorzugten Seitenwandpaneel 11 sind zwei Arten von Ständerelementen 16,17 vorgesehen, die jeweils abwechselnd zueinander entlang der Längsrichtung des Seitenwandpaneels 11 vorgesehen sind.

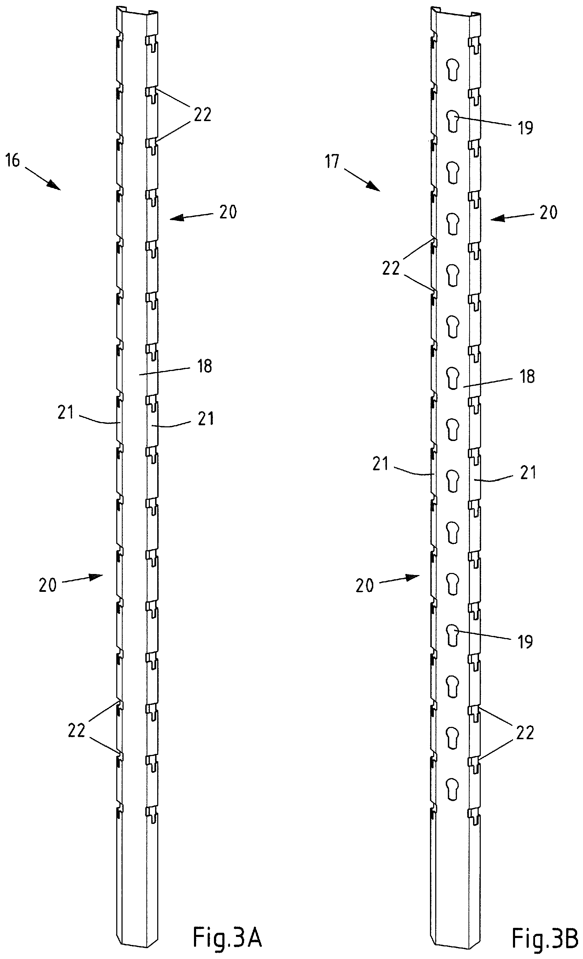

In der Fig. 3A-B sind die beiden Arten von Ständerelementen 16,17 separat dargestellt. Eine Art der Ständerelemente 16 ist schmaler als die andere Art der Ständerelemente 17. Die breitere Art der Ständerelemente 16,17 weist zudem an der von dem Seitenwandpaneel 11 wegweisenden Seite 18 über die Länge des Ständerelements 16,17 verteilt mehrere Ladungssicherungsöffnungen 19 zum Einhaken von Ladungssicherungselementen auf. Die breiteren Ständerelemente 17 sind ferner so angeordnet, dass sie ausgehend von der Stirnwand 4, jeweils etwa im Abstand von einer Europalette, also etwa zwischen 1150 mm und 1250 mm aufeinander folgen. Der Abstand benachbarter Ständerelemente 19,20 kann mithin bevorzugt zwischen 550 mm und 650 mm betragen. Bedarfsweise, insbesondere in Bezug auf die Länge von Europaletten kann der Abstand benachbarter Ständerelemente 19,20 aber auch zwischen 1100 mm und 1300 mm betragen. Insbesondere in Bezug auf die Breite von Europaletten in der Größenordnung von 800 mm kann der Abstand benachbarter Ständerelemente 19,20 aber auch zwischen 300 mm und 500 mm betragen. Den beiden Ständerelementen 16,17 ist gemein, dass sie an einander zugeordneten Seiten 20 seitlich nach außen in Richtung des Seitenwandpaneels 11 abgeschrägte Seitenflächen 21 aufweisen, die bei einer Kollision mit der Ladung beim Be- und Entladen des Kofferaufbaus 2 die Ladung in Richtung des Laderaums 8 ableiten, um eine nachhaltige Beschädigung des entsprechenden Ständerelements 16,17 zu vermeiden. In den Seitenflächen 21 sind über die Länge des Ständerelements 16,17 verteilt mehrere Verbindungsmittel 22 zum Einhaken von Ladungssicherungselementen oder von Ladungssicherungsprofilen vorgesehen. Grundsätzlich könnten anstelle von unterschiedlichen Arten von Ständerelementen 16,17 bei einer Seitenwand 5 auch nur gleichartige Ständerelemente 16,17 vorgesehen sein.

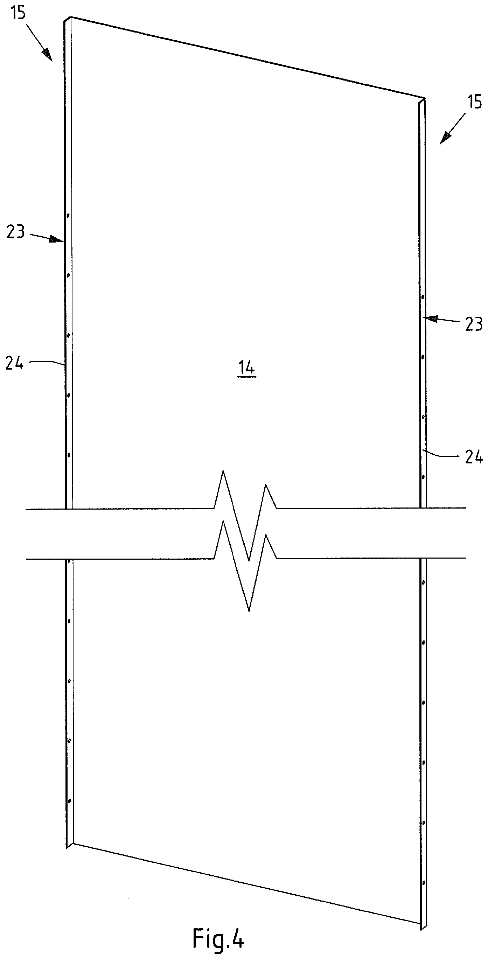

In der Fig. 4 ist ein Paneelelement 14 des Seitenwandpaneels 11 aus Fig. 2 dargestellt. Die Paneelelemente 14 des Seitenwandpaneels 11 aus Fig. 2 sind gleichartig aufgebaut und weisen demnach jeweils dieselben Abmessungen auf, auch wenn dies nicht zwingend der Fall sein muss. Die Paneelelemente 17 sind in den Verbindungsbereichen 15 an ihren seitlichen Rändern 23 nach innen in Richtung des Laderaums 8 umgebogen. Die Ränder 23 weisen daher jeweils eine Verbindungsfläche 24 auf, die aneinander angrenzend und wenigstens im Wesentlichen parallel zueinander ausgerichtet sind. Die entsprechenden Verbindungsflächen 24 werden dann zur Bildung des Seitenwandpaneels 11 miteinander verbunden, insbesondere verklebt. Die Paneelelemente 14 sind jeweils als mehrschichtiges Verbundlaminat 25 ausgebildet.

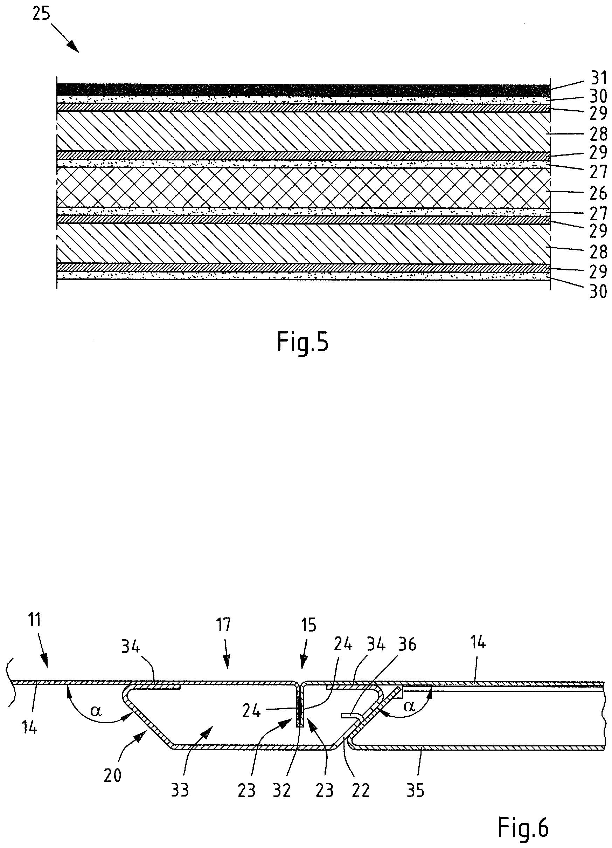

Der Aufbau des vorliegenden und insoweit bevorzugten Verbundlaminats 25 ist in der Fig. 5 exemplarisch dargestellt, wobei die Schichtdicken des Verbundlaminats nicht maßstabsgetreu wiedergegeben sind. Bei diesem Verbundlaminat 25 ist eine Kunststoffschicht 26 aus wenigstens im Wesentlichen Polypropylen (PP) vorgesehen, in dessen äußere Schichten ein Haftvermittler in Form von Maleinsäureanhydrid eingebracht ist. Die Kunststoffschicht 26 weist eine Dicke zwischen 0,5 mm und 3 mm, vorzugsweise zwischen 0,6 mm und 2 mm, insbesondere zwischen 0,8 und 1,2 mm auf. Zudem sind auf die Außenseiten der Kunststoffschicht 26 Klarlackschichten 27 einer Dicke von etwa 1 µm aufgebracht. An diese Klarlackschichten 27 schließen sich Metallschichten 28 einer Dicke von 200 µm bis 300 µm an, die jeweils an beiden Seiten mit einer Aluminium-Zink-Beschichtung 29 einer Dicke von zwischen 8 µm und 30 µm, vorzugsweise zwischen 9 µm und 20 µm, insbesondere zwischen 10 µm und 15 µm, versehen sind. Die äußeren Seiten der Metallschichten 28 sind wiederum mit einer Klarlackschicht 30 einer Dicke von etwa 1 µm überzogen. Die Außenseite des Paneelelements 14 bezogen auf den Laderaum 8 bzw. das Nutzfahrzeug 1 ist zudem mit einer Lackschicht 31 versehen, die eine Dicke zwischen 10 µm und 15 µm aufweist.

In der Fig. 6 ist ein Querschnitt der Seitenwand 5 im Bereich eines Ständerelements 17 und eines Verbindungsbereichs 15 zweier Paneelelemente 14 dargestellt. Die Paneelelemente 14 weisen angrenzend zueinander umgebogene Ränder 23 auf, die sich bei den dargestellten und insoweit bevorzugten Paeelelementen 14 wenigstens abschnittsweise senkrecht zur Seitenwand 5 nach innen in Richtung des Laderaums 8 erstrecken. In diesen Abschnitten weisen die Ränder 23 der Paneelelemente 14 aneinandergrenzende Verbindungflächen 24 auf, die über eine Klebeverbindung 32 miteinander verklebt sind, auch wenn die Klebeverbindung 32 bedarfsweise eher dem Abdichten des Spalts zwischen den Paneelelementen 14 dient. Alternativ oder zusätzlich zu Klebeverbindungen können im Verbindungsbereich 15 kraftschlüssige und/oder formschlüssige Verbindungen, beispielsweise Nietverbindungen, vorgesehen sein. Der entsprechende Verbindungbereich 15 wird von dem zugeordneten Ständerelement 17 überdeckt und übergriffen. Das Ständerelement 17 weist dabei die Form eines einseitig offenen Hohlprofils auf, das in seinem Inneren eine Aufnahme 33 für wenigstens Teile des Verbindungsbereichs 15 bereithält. Das Ständerelement 17 weist dabei einen trapezförmigen Querschnitt mit zwei in Richtung des Seitenwandpaneels 11 schräg nach außen geneigten Seiten 20 auf. Diese Seiten 20 verlaufen dabei in einem Winkel α von etwa 130° bis 150° in Bezug auf den sich seitlich anschließenden Bereich der Paneelelemente 14. Angrenzend zu den beiden dem Ständerelement 17 zugeordneten Paneelelementen 14 weist das Ständerelement 17 Anlageflächen 34 zur Anlage an die Paneelelemente 17 auf, wobei die Anlageflächen 34 vorliegend wenigstens im Wesentlichen parallel zueinander ausgerichtet und vorliegend auch wenigstens im Wesentlichen in einer gemeinsamen Ebene angeordnet sind. Mit diesen Anlageflächen 34 ist das Ständerelement 17 mit den angrenzenden Paneelelementen 14 verbunden, insbesondere verklebt.

Auf der rechts dargestellten Seite des Ständerelements 16, ist in das Ständerelement 16 formschlüssig eingehängt ein Ladungssicherungsprofil 35 dargestellt. Dazu weist das Ladungssicherungsprofil 35 ein Verbindungsmittel 36 auf, das vorliegend in Form eines Stabelement bzw. einer umgebogenen Lasche ausgebildet ist, und in ein Verbindungsmittel 22 des Ständerelements 16 eingreift, wobei das Verbindungsmittel 22 des Ständerelements 16 vorliegend als Öffnung bzw. Aufnahme ausgebildet ist. Über das Verbindungsmittel 36 des Ladungssicherungsprofils 35 wird das Ladungssicherungsprofil 35 formschlüssig, aber lösbar am Ständerelement 16 gehalten. Beim dargestellten und insoweit bevorzugten Ausführungsbeispiel weisen das Ständerelement 16 und das Ladungssicherungsprofil 35 wenigstens im Wesentlichen dieselbe Tiefe, also denselben maximalen Abstand zum Seitenwandpaneel 11 auf. Anstelle des Ladungssicherungsprofils 35 könnte auch ein Scheuerleistenprofil vorgesehen sein, wobei das Scheuerleistenprofil analog zu dem Ladungssicherungsprofil 35 ausgebildet und mit dem Ständerelement 16 verbunden sein kann. Der einzige Unterschied zwischen dem Ladungssicherungsprofil 35 und dem Scheuerleistenprofil kann darin liegen, dass das Scheuerleistenprofil keine Ladungssicherungsmittel zum Verbinden mit Ladungssicherungselementen aufweist. Das Scheuerleistenprofil weist dagegen bevorzugt eine ebene, insbesondere glatte, in den Laderaum 8 weisende Innenseite auf, so dass Ladung beim Be- und Entladen an der Innenseite des wenigstens einen Scheuerleistenprofils abgleiten kann, ohne den Kofferaufbau oder die Ladung dabei zu beschädigen.

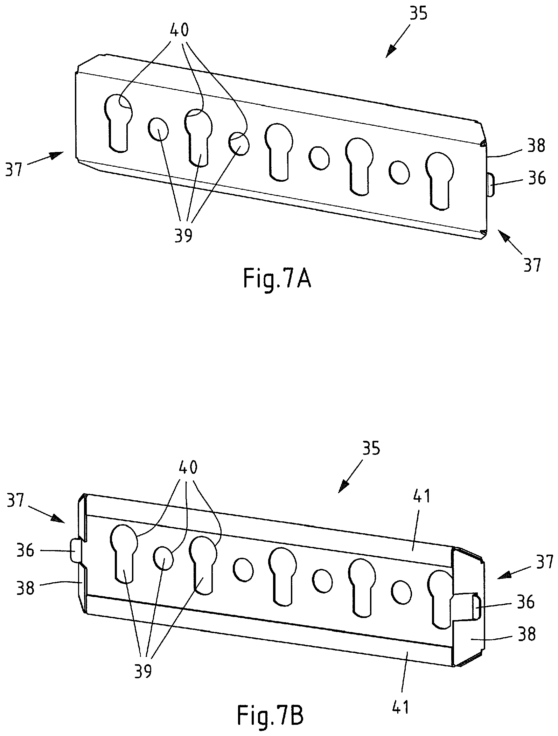

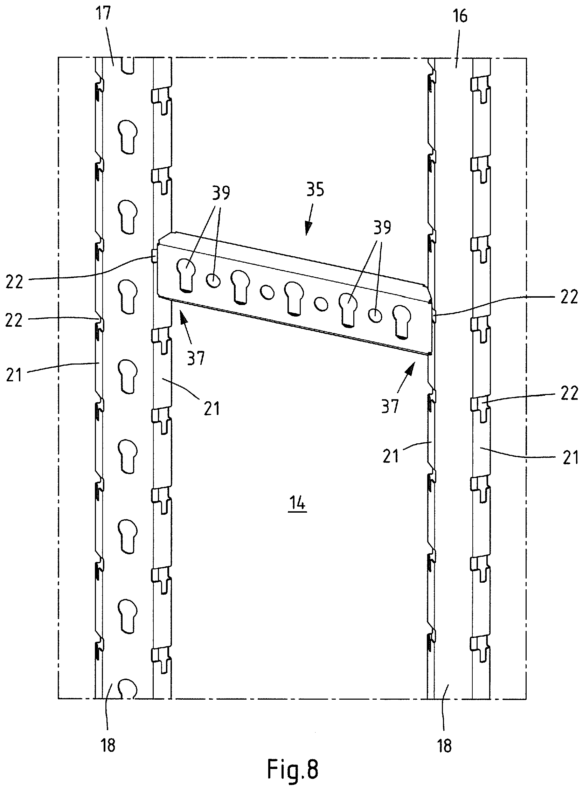

In den Fig. 7A-B ist das Ladungssicherungsprofil 35 aus der Fig. 6 in perspektivischen Ansichten von vorne und von hinten sowie in der Fig. 8 im mit zwei Ständerelementen 16,17 der Seitenwand 5 verbundenen Zustand dargestellt. Das Ladungssicherungsprofil 35 ist dazu ausgebildet, zwischen zwei benachbarten Ständerelementen 16,17 der Seitenwand 5 montiert zu werden. Zu diesem Zweck weist das Ladungssicherungsprofil 35 an gegenüberliegenden Endbereichen 37 sich schräg zum Seitenwandpaneel 11 erstreckende Seitenbereiche 38 auf, die zur Rücksicht um etwa 45° gegenüber dem Seitenwandpaneel 11 bzw. dem Ladungssicherungsprofil 35 nach innen geneigt sind. Damit sind die Endbereiche 37 des Ladungssicherungsprofils 35 korrespondierend zu den zugehörigen Seiten 21 der Ständerelemente 16,17 ausgebildet, mit denen das Ladungssicherungsprofil 35 verbunden ist. Die Endbereiche 37 des Ladungssicherungsprofils 35 und die zugehörigen Seiten 21 der Ständerelemente 16,17 können aneinander abgleiten, wenn das Ladungssicherungsprofil 35 zwischen den Ständerelementen 16,17 eingesetzt wird.

Eine Zentrierung des Ladungssicherungsprofils 35 zwischen den Ständerelementen 16,17 erfolgt mithin ohne größeres Zutun des Benutzers. Einzig muss der Benutzer dafür sorgen, dass die an den Endbereichen 37 des Ladungssicherungsprofils 35 in Längsrichtung zur freien Seite vorstehenden Verbindungsmittel 36 in Form von Laschen oder Stabelementen auf der richtigen Höhe angeordnet sind, so dass die Verbindungsmittel 36 in zugehörige Verbindungsmittel 22, etwa in Form von Öffnungen bzw. Aufnahmen der Ständerelemente 16,17, eingreifen. Ist dies der Fall und das Ladungssicherungsprofil 35 zudem richtig in Richtung des Seitenwandpaneels 11 zwischen den Ständerelementen 16,17 eingesetzt, ist es lediglich noch erforderlich, das Ladungssicherungsprofil 35 nach unten absacken zu lassen, so dass die Verbindungsmittel 36 des Ladungssicherungsmittels 35 formschlüssig in den als Öffnungen bzw. Aufnahmen ausgebildeten Verbindungsmitteln 22 der Ständerelemente 16,17 nach unten rutschen. Der Formschluss bewirkt, dass die Ladungssicherungsprofile 35 zur Seite und nach vorne, bedarfsweise auch nach hinten, jeweils bezogen auf das Ladungssicherungsprofil 35 festgelegt sind, auch wenn ein gewisses Spiel zwischen dem Ladungssicherungsprofil 35 und den Ständerelementen 16,17 zulässig sein kann. Um die Ladungssicherungsprofile 35 wieder von den Ständerelementen 16,17 zu trennen, müssen die Ladungssicherungsprofile 35 angehoben und aus den Verbindungsmitteln 22, etwa den Öffnungen bzw. Aufnahmen, der Ständerelemente 16,17 herausgehoben werden.

Zur eigentlichen Ladungssicherung stellt das dargestellte und insoweit bevorzugte Ladungssicherungsprofil 35 eine Reihe von Ladungssicherungsmitteln 39 in Form von Öffnungen bereit, die an ihren Rändern Hinterschneidungen 40 aufweisen, um Haken von Ladungssicherungselementen einhaken zu können. Das Ladungssicherungsprofil 35 weist zudem an der Rückseite Anlageflächen 41 auf, mit denen sich das Ladungssicherungsprofil 35 nach hinten am Seitenwandpaneel 11 bzw. am Paneelelement 14 abstützen kann.

In dem in Fig. 8 dargestellten und insoweit bevorzugten Ladungssicherungsprofil 35 sind zwei Arten von Ladungssicherungsmitteln 39 jeweils abwechselnd zueinander angeordnet, und zwar einmal schlüssellochförmige und einmal reisförmige Öffnungen. Es können aber grundsätzlich auch andere Öffnungen vorgesehen sein. Es können auch Öffnungen derselben Art oder Öffnungen von drei oder mehr Arten vorgesehen sein. Auch können Laschen, Ösen oder Nuten vorgesehen sein, die mit Ladungssicherungselementen verbunden werden können. Ebenso ist es möglich, dass mehrere parallele Reihen von Ladungssicherungsmitteln 39 in Form von Öffnungen, Laschen, Ösen, und/oder Nuten am Ladungssicherungsprofil 35 zum Zwecke der Ladungssicherung vorgesehen sind.

Grundsätzlich können auch andere als die dargestellten Verbindungsmittel 36 des Ladungssicherungsprofils 35 vorgesehen sein. Bei dem dargestellten und insoweit bevorzugten Ladungssicherungsprofil 35 könnten zudem auch an jedem Endbereich 37 mehr als ein Verbindungsmittel 36 vorgesehen sein. Diese Verbindungsmittel 36 sind dann vorzugsweise in Abständen zueinander angeordnet, die den Abständen der korrespondierenden Verbindungsmittel 22 der Ständerelemente 16,17 entsprechen. Dies ist insbesondere bei breiteren Ladungssicherungsprofilen oder zur Aufnahme größerer Ladungssicherungskräfte zweckmäßig. Unter der Breite der Ladungssicherungsprofile 35 wird dabei das Maß der montierten Ladungssicherungsprofile 35 parallel zum Seitenwandpaneel 11 und quer zum Ladungssicherungsprofil 35 verstanden. Breitere Ladungssicherungsprofile 35 können beispielsweise Ladungssicherungsmittel 39 auf unterschiedlichen Höhen im Laderaum 8 bereitstellen. Sehr breite Ladungssicherungsprofile 35 können sich bedarfsweise wenigstens im Wesentlichen über die gesamte Höhe des Seitenwandpaneels 11 erstrecken. Je breiter die Ladungssicherungsprofile 35 ausgebildet sind, desto mehr Verbindungsmittel 36 werden diese vorzugsweise an den Endbereichen 37 aufweisen und zwar in geeigneter Weise, insbesondere gleichmäßig, über die Breite der Ladungssicherungsprofile 35 verteilt.

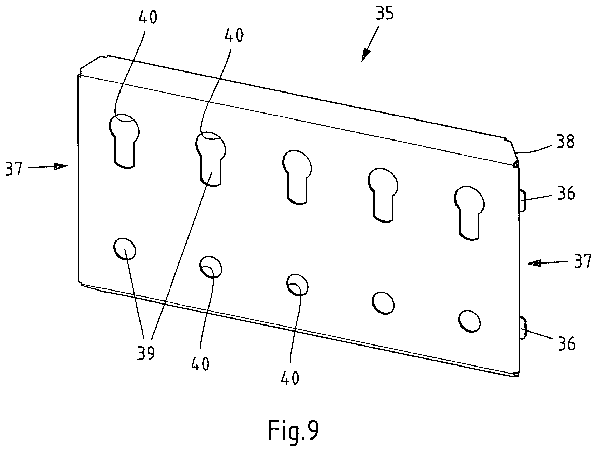

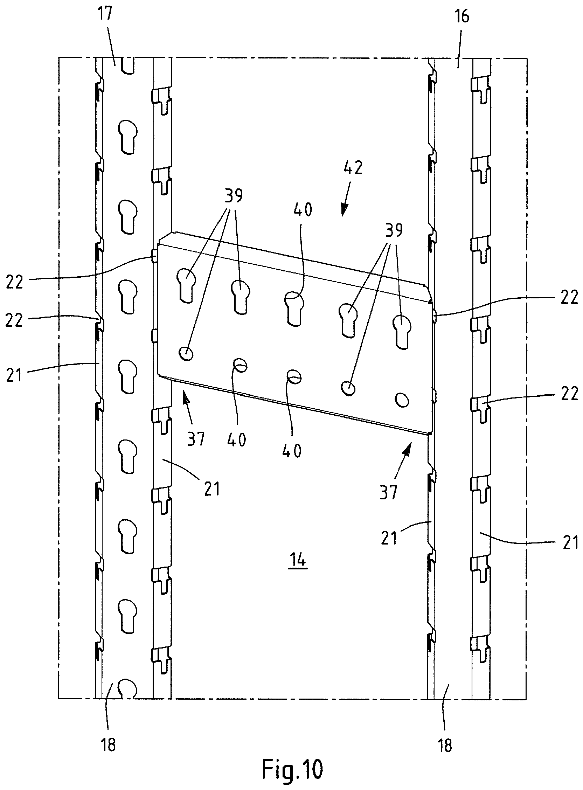

In der Fig. 9 ist ein alternatives Ladungssicherungsprofil 42 dargestellt, das in der Fig. 10 zusätzlich im mit zwei Ständerelementen 16,17 der Seitenwand 5 verbundenen Zustand dargestellt ist. Dabei ist das alternative Ladungssicherungsprofil 42 breiter ausgebildet als das Ladungssicherungsprofil 35 der Fig. 6A-B und weist zudem zwei zueinander parallele Reihen von Ladungssicherungsmitteln 39 auf. Die Ladungssicherungsmittel 39 sind dabei jeweils in Form von Hinterschneidungen 40 definierenden Öffnungen ausgebildet, wobei die obere Reihe von Öffnungen schlüssellochförmig und die untere Reihe von Öffnungen kreisförmig ausgebildet sind. Die formschlüssige Verbindung zwischen dem Ladungssicherungsprofil 42 und den Ständerelementen 16,17 wird an jeder Seite über zwei Verbindungsmittel 22,36 des Ständerelements 16,17 und dem zugehörigen Endbereich 43 des Ladungssicherungsprofils 42 gebildet. Dabei sind die Verbindungsmittel 36 des Ladungssicherungsprofils 42 jeweils stabförmig in Form einer umgebogenen Lasche ausgebildet, während die Verbindungsmittel 22 der Ständerelemente 16,17 als korrespondierende Aufnahmen ausgebildet sind.

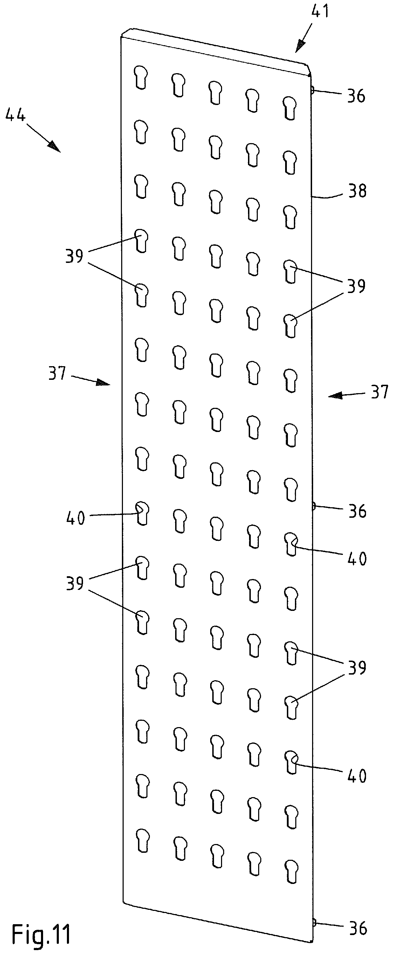

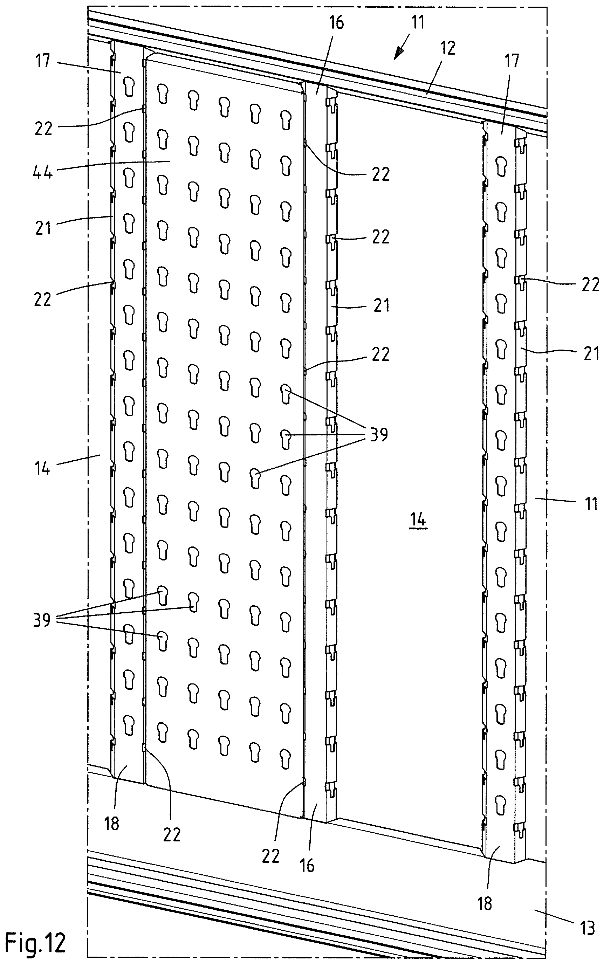

In der Fig. 11 ist ein alternatives Ladungssicherungsprofil 44 dargestellt, das in der Fig. 12 zusätzlich im mit zwei Ständerelementen 16,17 der Seitenwand 5 verbundenen Zustand dargestellt ist. Das dargestellte Ladungssicherungsprofil 44 ist dabei sehr breit ausgebildet, so dass es sich im montierten Zustand etwa über die gesamte Höhe des Seitenwandpaneels 11 erstreckt. Zudem sind bei dem dargestellten Ladungssicherungsprofil 44 viele Reihen von Ladungssicherungsmitteln 36 über die Breite des Ladungssicherungsprofils 44 verteilt angeordnet. Dabei sind die Ladungssicherungsmittel 36 als gleichförmige Öffnungen ausgebildet, die an ihren Randbereichen Hinterschneidungen 40 für das Einhaken von Ladungssicherungselementen bilden.

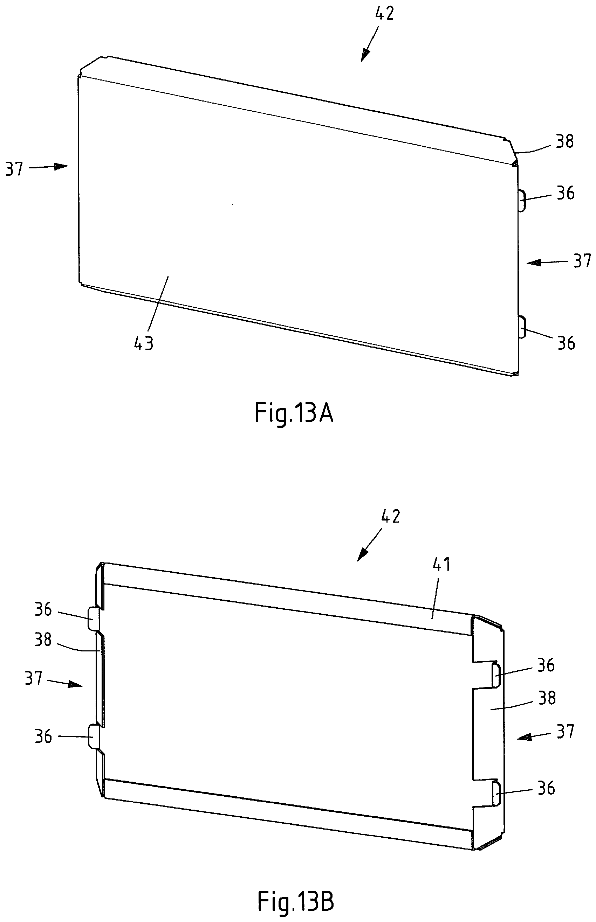

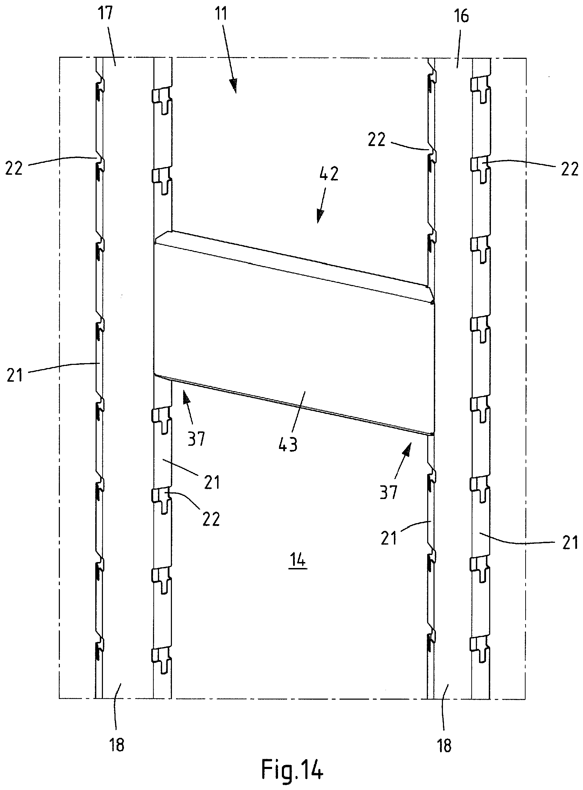

In den Fig. 13A-B ist ein Scheuerleistenprofil 45 analog zu dem in den Fig. 7A-B und 9 in perspektivischen Ansichten von vorne und von hinten sowie in der Fig. 14 im mit zwei Ständerelementen 16,17 der Seitenwand 5 verbundenen Zustand dargestellt. Das Scheuerleistenprofil 45 ist dazu ausgebildet, zwischen zwei benachbarten Ständerelementen 16,17 der Seitenwand 5 montiert zu werden. Zu diesem Zweck weist das Scheuerleistenprofil 45 an gegenüberliegenden Endbereichen 37 sich schräg zum Seitenwandpaneel 11 erstreckende Seitenbereiche 38 auf, die zur Rücksicht um etwa 45° gegenüber dem Seitenwandpaneel 11 bzw. dem Scheuerleistenprofil 45 nach innen geneigt sind. Damit sind die Endbereiche 37 des Scheuerleistenprofils 45 korrespondierend zu den zugehörigen Seiten 21 der Ständerelemente 16,17 ausgebildet, mit denen das Scheuerleistenprofil 45 verbunden ist. Die Endbereiche 37 des Scheuerleistenprofils 45 und die zugehörigen Seiten 21 der Ständerelemente 16,17 können aneinander abgleiten, wenn das Scheuerleistenprofil 45 zwischen den Ständerelementen 16,17 eingesetzt wird.

Eine Zentrierung des Scheuerleistenprofils 45 zwischen den Ständerelementen 16,17 erfolgt mithin ohne größeres Zutun des Benutzers. Einzig muss der Benutzer dafür sorgen, dass die an den Endbereichen 37 des Scheuerleistenprofils 45 in Längsrichtung zur freien Seite vorstehenden Verbindungsmittel 36 in Form von Laschen oder Stabelementen auf der richtigen Höhe angeordnet sind, so dass die Verbindungsmittel 36 in zugehörige Verbindungsmittel 22, etwa in Form von Öffnungen bzw. Aufnahmen der Ständerelemente 16,17, eingreifen. Ist dies der Fall und das Scheuerleistenprofil 45 zudem richtig in Richtung des Seitenwandpaneels 11 zwischen den Ständerelementen 16,17 eingesetzt, ist es lediglich noch erforderlich, das Scheuerleistenprofil 45 nach unten absacken zu lassen, so dass die Verbindungsmittel 36 des Scheuerleistenprofils 45 formschlüssig in den als Öffnungen bzw. Aufnahmen ausgebildeten Verbindungsmitteln 22 der Ständerelemente 16,17 nach unten rutschen. Der Formschluss bewirkt, dass die Scheuerleistenprofile 45 zur Seite und nach vorne, bedarfsweise auch nach hinten, jeweils bezogen auf das Scheuerleistenprofil 45 festgelegt sind, auch wenn ein gewisses Spiel zwischen dem Scheuerleistenprofil 45 und den Ständerelementen 16,17 zulässig sein kann. Um die Scheuerleistenprofile 45 wieder von den Ständerelementen 16,17 zu trennen, müssen die Scheuerleistenprofile 45 angehoben und aus den Verbindungsmitteln 22, etwa den Öffnungen bzw. Aufnahmen, der Ständerelemente 16,17 herausgehoben werden.

Zum Abgleiten der Ladung beim Be- und Entladen des Kofferaufbaus 2 stellt das dargestellte und insoweit bevorzugte Scheuerleistenprofil 45 eine glatte und ebene Innenseite bzw. Scheuerfläche 46 bereit, die in Richtung des Laderaums 8 und weg von dem zugehörigen Paneelelement 14 weist. Das Scheuerleistenprofil 45 weist zudem an der Rückseite Anlageflächen 41 auf, mit denen sich das Scheuerleistenprofil 45 nach hinten am Seitenwandpaneel 11 bzw. am Paneelelement 14 abstützen kann.

Das dargestellte und insoweit bevorzugte Scheuerleistenprofil 45 schließt in Richtung des Laderaums 8 wenigstens im Wesentlichen bündig mit den korrespondierenden Innenseiten 18 der angrenzenden Ständerelemente 17,16 ab. Dabei kann die gesamte Innenseite des Scheuerleistenprofils 45 bündig mit den Innenseiten 18 der angrenzenden Ständerelemente 17,16 abschließen oder nur einem Teil der Innenseite 18. Dabei erstreckt sich dieser Teil der Innenseite des Scheuerleistenprofils 45 vorzugsweise über wenigstens im Wesentlichen die gesamte Länge des Scheuerleistenprofils 45. Der Rest der Innenseite des Scheuerleistenprofils 45 kann dann aus dem Laderaum gesehen nach hinten zurückversetzt sein. Bei den Ständerelementen 16,17 kann auf Ladungssicherungsöffnungen 19 verzichtet werden, um die Ladung beim Be- und Entladen des Kofferaufbaus 2 nicht zu beschädigen.

Durch den wenigstens im Wesentlichen bündigen Abschluss zwischen den Scheuerleistenprofilen 45 und den angrenzenden Ständerelementen 16,17 in Richtung des Laderaums 8 können wenigstens ein Scheuerleistenprofil 45 und wenigstens zwei Ständerelemente 16,17 eine gemeinsame, wenigstens im Wesentlichen ebene Scheuerfläche 46 bilden. Bei den dem Laderaum 8 zugewandten Innenseiten 18 der Ständerelemente 16,17 können Ladungssicherungsöffnungen 19 vorgesehen sein, da diese infolge der Scheuerfläche 46 nicht mit der Ladung in Kontakt kommen.

Die Scheuerleistenprofile 45 können wie die Ladungssicherungsprofile 35 je nach Anwendungsfall breiter oder schmaler ausgebildet sein. Zudem können die Scheuerleistenprofile 45 bedarfsweise weiter in den Laderaum 8n hineinragen als die korrespondierenden Innenseiten 18 der Ständerelemente 16,17.

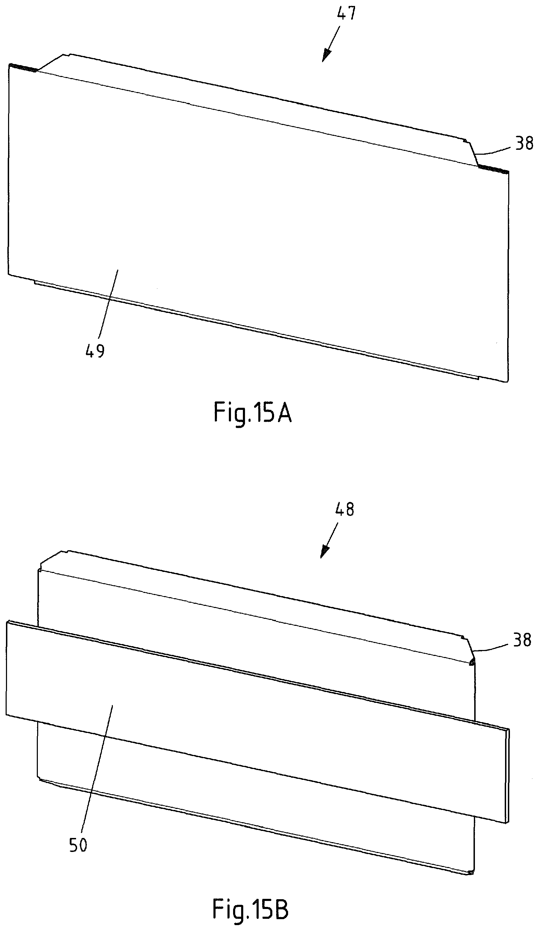

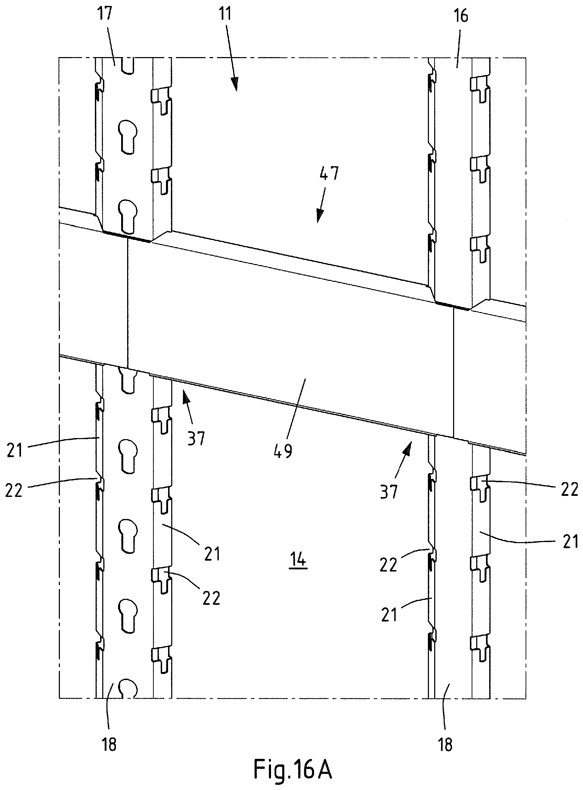

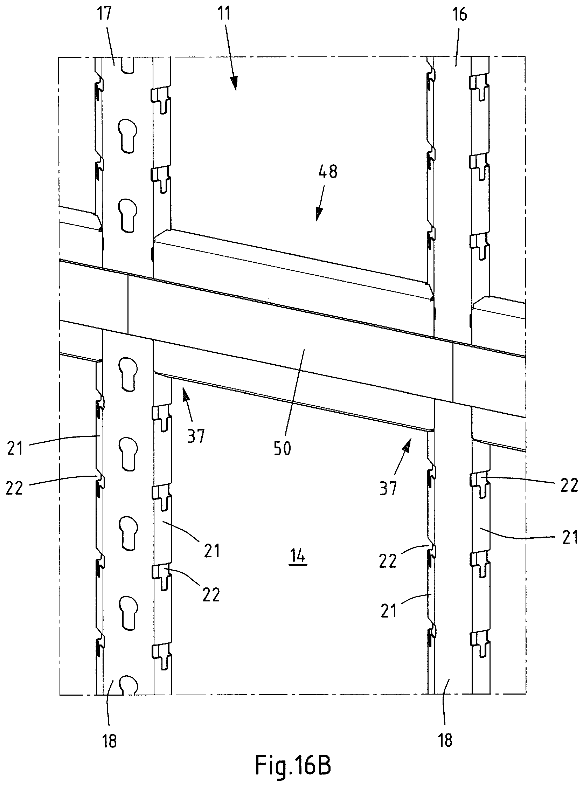

In den Fig. 15A-B und 16A-B sind zwei Scheuerleistenprofile 47,48 dargestellt, die dazu ausgebildet sind, sich wenigstens teilweise über die Innenseiten 18 der angrenzenden Ständerelemente 16,17 hinweg zu erstrecken, und zwar dem Laderaum zugewandt vor den Innenseiten 18 der angrenzenden Ständerelemente 16,17. Dadurch kann durch mehrere in einer Reihe hintereinander angeordnete Scheuerleistenprofile eine durchgängige Scheuerfläche 49,50 bereitgestellt werden. So werden primär die Scheuerleistenprofile 47,48, nicht jedoch die Ständerelemente 16,17 durch scheuernde Ladung abgenutzt. Dabei kann die Innenseite bzw. Scheuerfläche 49,50 der Scheuerleistenprofile 47,48 insgesamt eben sein oder nur teilweise mit den Innenseiten bzw. Scheuerflächen 49,50 der angrenzenden Scheuerleistenprofile 47,48 wenigstens im Wesentlichen fluchten. Besonders zweckmäßig ist es dabei, wenn die Scheuerleistenprofile 47,48 sich jeweils über wenigstens im Wesentlichen die Hälfte des jeweils seitlich angrenzenden Ständerelements 16,17 hinweg erstrecken. In diesem Fall können einfach symmetrische Scheuerleistenprofile genutzt werden, wenn die Ständerelemente der Seitenwand 5 gleichartig oder wenigstens gleich breit ausgebildet sind.

Es kann aber auch vorgesehen sein, dass sich ein Scheuerleistenprofil 47,48 in einem Mittelbereich über wenigstens ein Ständerelement 16,17 komplett hinweg erstreckt. So können einzelne Scheuerleistenprofile 47,48 deutlich länger sein als der Abstand benachbarter Ständerelemente 16,17. Insbesondere kann die Länge der Scheuerleistenprofile 47,48 ein Mehrfaches des Abstands zweier benachbarter Ständerelemente 16,17 betragen.

### Bezugszeichenliste

- 1: Nutzfahrzeug
- 2: Kofferaufbau
- 3: Dach
- 4: Stirnwand
- 5: Seitenwand
- 6: Rückwand
- 7: Flügeltür
- 8: Laderaum
- 9: Ladeboden
- 10: Bodenstruktur
- 11: Seitenwandpaneel
- 12: Holmstruktur
- 13: Sockelscheuerleiste
- 14: Paneelelement
- 15: Verbindungsbereich
- 16,17: Ständerelement
- 18: Seite
- 19: Ladungssicherungsöffnung
- 20: Seite
- 21: Seitenflächen
- 22: Verbindungsmittel
- 23: Rand
- 24: Verbindungsfläche
- 25: Verbundlaminat
- 26: Kunststoffschicht
- 27: Klarlackschicht
- 28: Metallschicht
- 29: Aluminium-Zink-Beschichtung
- 30: Klarlackschicht
- 31: Lackschicht
- 32: Klebeverbindung
- 33: Aufnahme
- 34: Anlagefläche
- 35: Ladungssicherungsprofil
- 36: Verbindungsmittel
- 37: Endbereich
- 38: Seitenbereich
- 39: Ladungssicherungsmittel
- 40: Hinterschneidung
- 41: Anlagefläche
- 42: Ladungssicherungsprofil
- 43: Endbereich
- 44: Ladungssicherungsprofil
- 45: Scheuerleistenprofil
- 46: Scheuerfläche
- 47,48: Scheuerleistenprofil
- 49,50: Scheuerfläche

## Patentansprüche

1. Kofferaufbau (2) eines Nutzfahrzeugs (1), insbesondere Lastkraftwagens, Anhängers oder Sattelaufliegers, mit wenigstens einer festen Seitenwand (5), wobei die Seitenwand (5) ein sich über wenigstens im Wesentlichen die gesamte Länge und wenigstens im Wesentlichen die gesamte Höhe der Seitenwand (5) erstreckendes Seitenwandpaneel (11) aufweist, wobei die Seitenwand (5) zwischen den seitlichen Rändern des Seitenwandpaneels (11) eine Mehrzahl von wenigstens im Wesentlichen quer zur Längsrichtung des Seitenwandpaneels(11) ausgerichteten, voneinander beabstandeten und mit dem Seitenwandpaneel (11) verbundenen Ständerelementen (16,17) zur Aussteifung der Seitenwand (5) aufweist,
**dadurch gekennzeichnet, dass** wenigstens einige von den Ständerelementen (16,17) der wenigstens einen Seitenwand (5) an einander zugeordneten Seiten (21) jeweils wenigstens ein Verbindungsmittel (22) zum lösbaren, formschlüssigen Verbinden mit Ladungssicherungsprofilen (35,42,44) und/oder Scheuerleistenprofilen (45,47,48) aufweisen.

2. Kofferaufbau nach Anspruch 1,
**dadurch gekennzeichnet, dass** wenigstens einige von jeweils benachbarten an einander zugeordneten Seiten (21) jeweils wenigstens ein Verbindungsmittel (22) zum lösbaren, formschlüssigen Verbinden mit Ladungssicherungsprofilen (35,42,44) und/oder Scheuerleistenprofilen (45,47,48) aufweisen und/oder dass die Ständerelemente (16,17) sich wenigstens im Wesentlichen über die gesamte Höhe der Seitenwand (5) und/oder des Seitenwandpaneels (11) erstrecken.

3. Kofferaufbau nach Anspruch 1 oder 2,
**dadurch gekennzeichnet, dass** wenigstens ein Ladungssicherungsprofil (35,42,44) und/oder Scheuerleistenprofil (45,47,48), vorzugsweise an gegenüberliegenden Endbereichen (37,43), insbesondere mit den Verbindungsmitteln (22) der entsprechenden Ständerelemente (16,17) korrespondierende, Verbindungsmittel (36) zum Verbinden mit Ständerelementen (16,17) aufweist und/oder dass wenigstens ein Ladungssicherungsprofil (35,42,44) und/oder Scheuerleistenprofil (45,47,48), vorzugsweise an gegenüberliegenden Endbereichen (37), über Verbindungsmittel (36) des Ladungssicherungsprofils (35,42,44) und/oder Scheuerleistenprofils (45,47,48) und, insbesondere korrespondierende, Verbindungsmittel (22) der Ständerelemente (16,17) mit zwei, vorzugsweise benachbarten Ständerelementen (16,17), insbesondere an einander zugeordneten Seiten (21) der Ständerelemente (16,17), verbunden ist.

4. Kofferaufbau nach einem der Ansprüche 1 bis 3,
**dadurch gekennzeichnet, dass** die jeweils benachbarten Ständerelemente (16,17) der Seitenwand (5), insbesondere die einander zugeordneten Verbindungsmittel (22) der jeweils benachbarten Ständerelemente (16,17), einen konstanten Abstand aufweisen und/oder dass die Verbindungsmittel (22) der Ständerelemente (16,17) der Seitenwand (5) gleichartig ausgebildet sind und/oder dass die Ständerelemente (16,17) der Seitenwand (5) gleichartig ausgebildet sind.

5. Kofferaufbau nach einem der Ansprüche 1 bis 4,
**dadurch gekennzeichnet, dass** wenigstens ein Ladungssicherungsprofil (35,42,44) wenigstens ein Ladungssicherungsmittel (39), vorzugsweise eine Reihe von Ladungssicherungsmitteln (39), aufweist und dass, vorzugsweise, das wenigstens eine Ladungssicherungsmittel (39) als Öse, als Lasche, als, insbesondere wenigstens eine Hinterschneidung (40) aufweisende, Nut und/oder als, insbesondere wenigstens eine Hinterschneidung (40) aufweisende, Öffnung ausgebildet ist.

6. Kofferaufbau nach einem der Ansprüche 1 bis 5,
**dadurch gekennzeichnet, dass** an wenigstens einer Seite (21) der Ständerelemente (16,17) über die Längserstreckung der Ständerelemente (16,17), insbesondere in regelmäßigen Abständen, verteilt eine Reihe von Verbindungsmitteln (22) vorgesehen sind und dass, vorzugsweise, wenigstens ein Ladungssicherungsprofil (35,42,44) und/oder Scheuerleistenprofil (45,47,48) gleichzeitig mit wenigstens zwei Verbindungsmitteln (22) wenigstens eines Ständerelements (16,17) verbunden ist.

7. Kofferaufbau nach einem der Ansprüche 1 bis 6,
**dadurch gekennzeichnet, dass** das Seitenwandpaneel (11) eine Mehrzahl von in Längsrichtung des Seitenwandpaneels (11) nebeneinander angeordnete und über Verbindungsbereiche (15) miteinander verbundene, insbesondere miteinander verklebte, Paneelelemente (14) aufweist und dass, vorzugsweise, wenigstens einige Ständerelemente (16,17) jeweils einem Verbindungsbereich (15) der Paneelelemente (14) zugeordnet, insbesondere den Verbindungsbereich (15) überdeckend und/oder überbrückend angeordnet, sind und dass, weiter vorzugsweise, die Ständerelemente (16,17) wenigstens teilweise außerhalb der entsprechenden Verbindungsbereiche (15) mit jeweils den über die jeweiligen Verbindungsbereiche (15) miteinander verbundenen Paneelelementen (14) verbunden, insbesondere verklebt, sind.

8. Kofferaufbau nach einem der Ansprüche 1 bis 7
**dadurch gekennzeichnet, dass** die Seitenwand (5) einschalig ausgebildet ist und dass, vorzugsweise, das Seitenwandpaneel (11) auf lediglich einer Seite (21) der Ständerelemente (16,17) der Seitenwand (5) vorgesehen ist und dass, weiter vorzugsweise, das Seitenwandpaneel (11) zwischen den Ständerelementen (16,17) und/oder die Ständerelemente (16,17) vom Laderaum (8) des Kofferaufbaus (2) wenigstens abschnittsweise, insbesondere überwiegend, zugänglich ist/sind.

9. Kofferaufbau nach einem der Ansprüche 1 bis 8,
**dadurch gekennzeichnet, dass** die Ständerelemente (16,17) als Profile, vorzugsweise Metallprofile, ausgebildet sind und/oder dass die Ständerelemente (16,17) als, insbesondere offene, Hohlprofile ausgebildet sind und/oder dass die Ständerelemente (16,17), insbesondere wenigstens im Wesentlichen durchgängig, einen trapezförmigen und/oder omegaförmigen und/oder hutförmigen Querschnitt aufweisen.

10. Kofferaufbau nach einem der Ansprüche 1 bis 9,
**dadurch gekennzeichnet, dass** dass die Ständerelemente (16,17) jeweils eine Aufnahme (33) zur wenigstens abschnittsweisen Aufnahme eines sich in Richtung des Laderaums (8) des Kofferaufbaus (2) erstreckenden Verbindungsbereichs (15) aufweisen und dass, vorzugsweise, die Ständerelemente (16,17) jeweils mit Anlageflächen (34) zu gegenüberliegenden Seiten des jeweiligen Verbindungsbereichs (15) an den angrenzenden Paneelelementen (14) anliegen, insbesondere verklebt sind.

11. Kofferaufbau nach einem der Ansprüche 7 bis 10,
**dadurch gekennzeichnet, dass** die miteinander verbundenen Paneelelemente (14) an ihren jeweils benachbarten Rändern (23) zum Laderaum (8) des Kofferaufbaus (2) hin umgebogen, insbesondere abgekantet, sind und dass, vorzugsweise, die umgebogenen, insbesondere abgekanteten, benachbarten Ränder (23) der Paneelelemente (14) jeweils miteinander verbunden, insbesondere, verklebt sind.

12. Kofferaufbau nach einem der Ansprüche 1 bis 11,
**dadurch gekennzeichnet, dass** die einander zugeordneten Seiten (21) der Ständerelemente (16,17) bezogen auf die Ständerelemente (16,17) schräg nach außen und hin zum Seitenwandpaneel (11) verlaufen und dass, vorzugsweise, die einander zugeordneten Seiten (21) der Ständerelemente (16,17) mit den seitlich an die Ständerelemente (16,17) angrenzenden Abschnitten des Seitenwandpaneels (11) einen stumpfen Winkel, vorzugsweise zwischen 110° und 160°, insbesondere zwischen 125° und 145°, ausbilden.

13. Kofferaufbau nach einem der Ansprüche 3 bis 11,
**dadurch gekennzeichnet, dass** die Endbereiche (37) des wenigstens einen Ladungssicherungsprofils (35,42,44) und/oder Scheuerleistenprofils (45,47,48) wenigstens abschnittsweise bezogen auf das Ladungssicherungsprofil (35,42,44) und/oder das Scheuerleistenprofil (45,47,48), insbesondere korrespondierend zu wenigstens einer Seite (21) wenigstens eines Ständerelements (16,17), schräg nach innen und hin zum Seitenwandpaneel (11) verlaufen und dass, vorzugsweise, die Endbereiche (37) des wenigstens einen Ladungssicherungsprofils (35,42,44) und/oder Scheuerleistenprofils (45,47,48) wenigstens abschnittsweise mit den seitlich angrenzenden Abschnitten des Seitenwandpaneels (11) einen spitzen Winkel, vorzugsweise zwischen 20° und 70°, insbesondere zwischen 35° und 55°, ausbilden.

14. Kofferaufbau nach einem der Ansprüche 1 bis 13,
**dadurch gekennzeichnet, dass** die Verbindungsmittel (22) der Ständerelemente (16,17) als, vorzugsweise Hinterschneidungen definierende, Öffnungen und/oder Aufnahmen ausgebildet sind und/oder dass die Verbindungsmittel (36) des wenigstens einen Ladungssicherungsprofils (35,42,44) und/oder Scheuerleistenprofils (45,47,48) korrespondierend zu den Öffnungen und/oder Aufnahmen, vorzugsweise als, insbesondere Hinterschneidungen, weiter insbesondere pilzkopfförmige freie Enden, aufweisende, Stabelemente und/oder Laschen ausgebildet sind.

15. Kofferaufbau nach einem der Ansprüche 1 bis 14,
**dadurch gekennzeichnet, dass** das Seitenwandpaneel (11), insbesondere die Paneelelemente (14) aus einem Verbundlaminat (25) umfassend wenigstens zwei Metallschichten (28) und wenigstens eine zwischen den wenigstens zwei Metallschichten (28) vorgesehene Kunststoffschicht (26) gebildet ist und dass, vorzugsweise, die Kunststoffschicht (26) des wenigstens einen Seitenwandpaneels (11) wenigstens im Wesentlichen aus einem thermoplastischen Kunststoff, vorzugsweise aus wenigstens einem Olefin, insbesondere wenigstens überwiegend aus Polypropylen (PP), und/oder wenigstens eine der wenigstens zwei Metallschichten (28) des wenigstens einen Seitenwandpaneels (11) aus Aluminium und/oder Stahl gebildet ist.

## Claims

1. Box body (2) of a commercial vehicle (1), in particular a truck, trailer or semitrailer, having at least one fixed side wall (5), wherein the side wall (5) has a side wall panel (11) extending over at least substantially the entire length and at least substantially the entire height of the side wall (5), wherein the side wall (5), between the lateral edges of the side wall panel (11), has a plurality of upright elements (16, 17) aligned at least substantially transverse to the longitudinal direction of the side wall panel (11), spaced apart from one another and connected to the side wall panel (11) in order to reinforce the side wall (5), **characterised in that** at least some of the upright elements (16, 17) of the at least one side wall (5) at sides (21) assigned to one another each have at least one connection means (22) to connect in a releasable and form-fitting manner to load securing profiles (35, 42, 44) and/or skirting board profiles (45, 47, 48).

2. Box body according to claim 1, **characterised in that** at least some of respectively adjacent sides (21) assigned to one another each have at least one connection means (22) to connect in a releasable and form-fitting manner to load securing profiles (35, 42, 44) and/or skirting board profiles (45, 47, 48) and/or **in that** the upright elements (16, 17) extend at least substantially over the entire height of the side wall (5) and/or of the side wall panel (11).

3. Box body according to claim 1 or 2, **characterised in that** at least one load securing profile (35, 42, 44) and/or skirting board profile (45, 47, 48), preferably at opposite end regions (37, 43), has connection means (36) which correspond in particular to the connection means (22) of the corresponding upright elements (16, 17) for connecting to the upright elements (16, 17) and/or **in that** at least one load securing profile (35, 42, 44) and/or skirting board profile (45, 47, 48), preferably at opposite end regions (37), is connected to two, preferably adjacent upright elements (16, 17), in particular at sides (21) of the upright elements (16, 17) assigned to one another via connection means (36) of the load securing profile (35, 42, 44) and/or skirting board profile (45, 47, 48) and, in particular corresponding connection means (22) of the upright elements (16, 17).

4. Box body according to any one of claims 1 to 3, **characterised in that** the respectively adjacent upright elements (16, 17) of the side wall (5), in particular the connection means (22) of the respectively adjacent upright elements (16, 17) assigned to one another, have a constant distance and/or **in that** the connection means (22) of the upright elements (16, 17) of the side wall (5) are designed identically and/or **in that** the upright elements (16, 17) of the side wall (5) are designed identically.

5. Box body according to any one of claims 1 to 4, **characterised in that** at least one load securing profile (35, 42, 44) has at least one load securing means (39), preferably a row of load securing means (39), and **in that**, preferably, the at least one load securing means (39) is designed as an eyelet, tab, as a groove having in particular at least one undercut (4) and/or as an opening having in particular at least one undercut (40).

6. Box body according to any one of claims 1 to 5, **characterised in that** a row of connection means (22) are provided on at least one side (21) of the upright elements (16, 17) distributed over the longitudinal extension of the upright elements (16, 17), in particular at regular distances and **in that**, preferably, at least one load securing profile (35, 42, 44) and/or skirting board profile (45, 47, 48) is connected simultaneously to at least two connection means (22) of at least one upright element (16, 17).

7. Box body according to any one of claims 1 to 6, **characterised in that** the side wall panel (11) has a plurality of panel elements (14) arranged next to one another in the longitudinal direction of the side wall panel (11) and connected to one another, in particular adhered to one another, via connection regions (15) and **in that**, preferably, at least some upright elements (16, 17), each assigned to a connection region (15) of the panel elements (14), are arranged overlapping and/or spanning in particular the connection region (15) and **in that**, more preferably, the upright elements (16, 17), at least partially outside of the corresponding connection regions (15), are connected, in particular adhered, to each of the panel elements (14) connected to one another via the respective connection regions (15).

8. Box body according to any one of claims 1 to 7, **characterised in that** the side wall (5) is designed in a single layered manner and **in that**, preferably, the side wall panel (11) is provided on only one side (21) of the upright elements (16, 17) of the side wall (5) and **in that**, more preferably, the side wall panel (11) between the upright elements (16, 17) and/or the upright elements (16, 17) is/are accessible from the loading space (8) of the box body (2) at least in sections, in particular predominantly.

9. Box body according to any one of claims 1 to 8, **characterised in that** the upright elements (16, 17) are designed as profiles, preferably metal profiles, and/or **in that** the upright elements (16, 17) are designed as, in particular open, hollow profiles and/or **in that** the upright elements (16, 17) have, in particular at least substantially continuously, a trapezoidal and/or omega-shaped and/or hat-shaped cross-section.

10. Box body according to any one of claims 1 to 9, **characterised in that** the upright elements (16, 17) each have a receiving portion (33) for at least partially receiving a connection region (15) extending in the direction of the loading space (8) of the box body (2) and **in that**, preferably, the upright elements (16, 17) each abut, in particular are adhered, with contact surfaces (34) at opposing sides of the respective connection region (15) on the adjoining panel elements (14).

11. Box body according to any one of claims 7 to 10, **characterised in that** the panel elements (14) connected to one another are bent, in particular chamfered, on their respectively adjacent edges (23) towards the loading space (8) of the box body (2) and **in that**, preferably, the bent, in particular chamfered, adjacent edges (23) of the panel elements (14) are each connected, in particular adhered, to one another.

12. Box body according to any one of claims 1 to 11, **characterised in that** the sides (21) of the upright elements (16, 17) assigned to one another runs, in relation to the upright elements (16, 17), obliquely outwards and towards the side wall panel (11) and **in that**, preferably, the sides (21) of the upright elements (16, 17) assigned to one another form an obtuse angle, preferably between 110° and 160°, in particular between 125° and 145° with the sections of the side wall panel (11) laterally adjoining the upright elements (16, 17).

13. Box body according to any one of claims 3 to 11, **characterised in that** the end regions (37) of the at least one load securing profile (35, 42, 44) and/or skirting board profile (45, 47, 48) run obliquely inwards and towards the side wall panel (11) at least in sections in relation to the load securing profile (35, 42, 44) and/or the skirting board profile (45, 47, 48), in particular corresponding to at least one side (21) of at least one upright element (16, 17), and **in that**, preferably, the end regions (37) of the at least one load securing profile (35, 42, 44) and/or skirting board profile (45, 47, 48) form an acute angle, preferably between 20° and 70°, in particular between 35° and 55°, at least in sections with the laterally adjoining sections of the side wall panel (11).

14. Box body according to any one of claims 1 to 13, **characterised in that** the connection means (22) of the upright elements (16, 17) are designed as openings and/or receiving portions preferably defining undercuts and/or **in that** the connection means (36) of the at least one load securing profile (35, 42, 44) and/or skirting board profile (45, 47, 48) are designed corresponding to the openings and/or receiving portions, preferably as rod elements and/or tabs having in particular undercuts, further in particular mushroom head-shaped free ends.

15. Box body according to any one of claims 1 to 14, **characterised in that** the side wall panel (11), in particular the panel elements (14), is formed from a composite laminate (25) comprising at least two metal layers (28) and at least one plastic layer (26) provided between the at least two metal layers (28) and **in that**, preferably, the plastic layer (26) of the at least one side wall panel (11) is formed at least substantially from a thermoplastic, preferably from at least one olefin, in particular at least predominately from polypropylene (PP), and/or at least one of the at least two metal layers (28) of the at least one side wall panel (11) is formed from aluminium and/or steel.

## Revendications

1. Structure de coffre (2) d'un véhicule utilitaire (1), notamment un poids lourd, une remorque ou une semi-remorque, avec au moins une paroi latérale fixe (5), la paroi latérale (5) présentant un panneau de paroi latérale (11) s'étendant sur au moins sensiblement l'ensemble de la longueur et au moins sensiblement sur l'ensemble de la hauteur de la paroi latérale (5), la paroi latérale (5) présentant, entre les bords latéraux du panneau de paroi latérale (11), une pluralité d'éléments de support (16, 17) orientés au moins sensiblement transversalement par rapport à la direction longitudinale des panneaux de paroi latérale (11), mutuellement espacés et reliés au panneau de paroi latérale (11) pour rigidifier la paroi latérale (5),
**caractérisé en ce qu'**au moins certains des éléments de support (16, 17) d'au moins une paroi latérale (5) présentent, sur des côtés mutuellement associés (21), respectivement au moins un moyen d'assemblage (22) pour l'assemblage amovible par liaison de forme avec des profilés d'arrimage de chargement (35, 42, 44) et/ou des profilés de plinthe (45, 47, 48).

2. Structure de coffre selon la revendication 1,
**caractérisé en ce qu'**au moins certains de ceux qui sont adjacents présentent, sur des côtés mutuellement associés (21), respectivement au moins un moyen d'assemblage (22) pour l'assemblage amovible par liaison de forme avec des profilés d'arrimage de chargement (35, 42, 44) et/ou des profilés de plinthe (45, 47, 48), et /ou **en ce que** les éléments de support (16, 17) s'étendent au moins sensiblement sur l'ensemble de la hauteur de la paroi latérale (5) et/ou du panneau de paroi latérale (11).

3. Structure de coffre selon la revendication 1 ou 2,
**caractérisé en ce qu'**au moins un profilé d'arrimage de chargement (35, 42, 44) et/ou un profilé de plinthe (45, 47, 48) présente, de préférence sur des parties d'extrémité opposées (37, 43), notamment en correspondance avec les moyens d'assemblage (22) des éléments de support (16, 17) correspondants, des moyens d'assemblage (36), pour l'assemblage avec les éléments de support (16, 17) et/ou **en ce qu'**au moins un profilé d'arrimage de chargement (35, 42, 44) et/ou un profilé de plinthe (45, 47, 48), de préférence sur des parties d'extrémité opposées (37), est relié, par l'intermédiaire d'un moyen d'assemblage (36) du profilé d'arrimage de chargement (35, 42, 44) et/ou du profilé de plinthe (45, 47, 48) et, notamment en correspondance au moyen d'assemblage (22) des éléments de support (16, 17), avec deux éléments de support (16, 17), de préférence adjacents, notamment sur des côtés mutuellement associés (21) des éléments de support (16, 17).

4. Structure de coffre selon l'une des revendications 1 à 3,
**caractérisé en ce que** les éléments de support (16, 17) respectivement adjacents de la paroi latérale (5), notamment les moyens d'assemblage (22) mutuellement associés des éléments de support (16, 17) respectivement adjacents, présentent une distance constante et/ou **en ce que** les moyens d'assemblage (22) des éléments de support (16, 17) de la paroi latérale (5) sont conçus de manière identique et/ou **en ce que** les éléments de support (16, 17) de la paroi latérale (5) sont conçus de manière identique.

5. Structure de coffre selon l'une des revendications 1 à 4,
**caractérisé en ce qu'**au moins un profilé d'arrimage de chargement (35, 42, 44) présente au moins un moyen d'arrimage de chargement (39), de préférence une rangée de moyens d'arrimage de chargement (39), et **en ce que**, de préférence, le au moins un moyen d'arrimage de chargement (39) est conçu sous forme d'oeillet, de languette, de rainure présentant notamment au moins une contre-dépouille (40) et/ou d'ouverture présentant notamment au moins une contre-dépouille (40).

6. Structure de coffre selon l'une des revendications 1 à 5,
**caractérisé en ce que**, sur au moins un côté (21) des éléments de support (16, 17), l'on prévoit une rangée de moyens d'assemblage (22) répartis sur l'extension longitudinale des éléments de support (16, 17), notamment à des distances régulières et **en ce que**, de préférence, au moins un profilé d'arrimage de chargement (35, 42, 44) et/ou un profilé de plinthe (45, 47, 48) est relié, simultanément, avec au moins deux moyens d'assemblage (22) d'au moins un élément support (16, 17).

7. Structure de coffre selon l'une des revendications 1 à 6,
**caractérisé en ce que** le panneau de paroi latérale (11) présente une multitude d'éléments de panneau (14) agencés l'un à côté de l'autre en direction longitudinale du panneau de paroi latérale (11) et mutuellement reliés, notamment mutuellement collés, par l'intermédiaire de zones d'assemblage (15), et **en ce que**, de préférence, au moins certains éléments de support (16, 17), respectivement associés à une zone d'assemblage (15) des éléments de panneau (14), sont agencés en recouvrement et/ou en pontant la zone d'assemblage (15) et **en ce que**, tout particulièrement, les éléments de support (16, 17), au moins partiellement à l'extérieur des zones d'assemblage correspondantes (15), sont reliés, notamment collés, avec respectivement les éléments de panneau (14) mutuellement reliés par l'intermédiaire des zones d'assemblage (15).

8. Structure de coffre selon l'une des revendications 1 à 7
**caractérisé en ce que** la paroi latérale (5) est conçue en une seule paroi et **en ce que** l'on prévoit, de préférence, le panneau de paroi latérale, (11) sur seulement un côté (21) des éléments de support (16, 17) de la paroi latérale (5) et **en ce que**, tout particulièrement, le panneau de paroi latérale (11) entre les éléments de support (16, 17) et/ou les éléments de support (16, 17) de l'espace de chargement (8) de la structure de coffre (2) est/sont accessible(s) au moins par sections, notamment en majeure partie.

9. Structure de coffre selon l'une des revendications 1 à 8,
**caractérisé en ce que** les éléments de support (16, 17) sont conçus sous forme de profilés, de préférence de profilés métalliques et/ou **en ce que** les éléments de support (16, 17) sont conçus sous forme de profilés creux, notamment ouverts, et/ou **en ce que** les éléments de support (16, 17), notamment au moins sensiblement de manière continue, présentent une section transversale trapézoïdale et/ou en forme d'oméga et/ou en forme de chapeau.

10. Structure de coffre selon l'une des revendications 1 à 9,
**caractérisé en ce que** les éléments de support (16, 17) présentent respectivement un logement (33) pour loger au moins par section une zone d'assemblage (15) s'étendant en direction de l'espace de chargement (8) de la structure de coffre (2) et **en ce que**, de préférence, les éléments de support (16, 17) s'appuient, notamment sont collés, respectivement avec des surfaces d'appui (34), sur des côtés opposés de la zone d'assemblage respective (15), contre/sur des éléments de panneau adjacents (14).

11. Structure de coffre selon l'une des revendications 7 à 10,
**caractérisé en ce que** les éléments de panneau mutuellement reliés (14) sont, sur leurs bords adjacents (23) vers l'espace de chargement (8) de la structure de coffre (2), repliés notamment chanfreinés, et **en ce que**, de préférence, les bords adjacents (23) repliés, notamment chanfreinés, des éléments de panneau (14) sont respectivement mutuellement reliés, notamment collés.

12. Structure de coffre selon l'une des revendications 1 à 11,
**caractérisé en ce que** les côtés mutuellement associés (21) des éléments de support (16, 17) par rapport aux éléments de support (16, 17) s'étendent obliquement vers l'extérieur et vers le panneau de paroi latérale (11) et **en ce que**, de préférence, les côtés mutuellement associés (21) des éléments de support (16, 17) forment, avec les sections du panneau de paroi latérale (11) adjacentes latéralement aux éléments de support (16, 17), un angle obtus, de préférence entre 110° et 160°, notamment entre 125° et 145°.

13. Structure de coffre selon l'une des revendications 3 à 11,
**caractérisé en ce que** les parties d'extrémité (37) d'au moins un profilé d'arrimage de chargement (35, 42, 44) et/ou un profilé de plinthe (45, 47, 48), au moins par section par rapport au profilé d'arrimage de chargement (35, 42, 44) et/ou au profilé de plinthe (45, 47, 48), notamment en correspondance avec au moins un côté (21) d'au moins un élément support (16, 17), s'étendent obliquement vers l'intérieur et vers le panneau de paroi latérale (11) et **en ce que**, de préférence, les parties d'extrémités (37) d'au moins un profilé d'arrimage de chargement (35, 42, 44) et/ou d'un profilé de plinthe (45, 47, 48) forment, au moins par section avec les sections adjacentes latéralement du panneau de paroi latérale (11), un angle aigu, de préférence entre 20° et 70°, notamment entre 35° et 55°.

14. Structure de coffre selon l'une des revendications 1 à 13,
**caractérisé en ce que** les moyens d'assemblage (22) des éléments de support (16, 17) sont conçus sous forme d'ouvertures, de préférence définissant des contre-dépouilles, et/ou de logements et/ou **en ce que** les moyens d'assemblage (36) d'au moins un profilé d'arrimage de chargement (35, 42, 44) et/ou d'un profilé de plinthe (45, 47, 48) sont conçus, en correspondance aux ouvertures et/ou aux logements, de préférence sous forme d'éléments de type tige et/ou languettes, présentant notamment des contre-dépouilles, tout particulièrement des extrémités libres en forme de champignon.

15. Structure de coffre selon l'une des revendications 1 à 14,
**caractérisé en ce que** le panneau de paroi latérale (11), notamment les éléments de panneau (14), est formé en un stratifié composé (25) comportant au moins deux couches métalliques (28) et au moins une couche en matière synthétique (26) prévue entre les au moins deux couches métalliques (28) et **en ce que**, de préférence, la couche en matière synthétique (26) d'au moins un panneau de paroi latérale (11) est formée au moins sensiblement en une résine synthétique thermoplastique, de préférence à partir d'au moins une oléfine, notamment au moins majoritairement de polypropylène (PP), et/ou **en ce qu'**au moins une des deux couches métalliques (28) d'au moins un panneau de paroi latérale (11) est formée en aluminium et/ou en acier.
